(19) Europäisches Patentamt
European Patent Office
Office européen des brevets

(11) EP 4 737 130 A1

(12) # EUROPEAN PATENT APPLICATION
published in accordance with Art. 153(4) EPC

(43) Date of publication:
**06.05.2026 Bulletin 2026/19**

(21) Application number: **24831600.2**

(22) Date of filing: **06.06.2024**

(51) International Patent Classification (IPC):
***B41M 5/00*** *(2006.01)* ***B41J 2/17*** *(2006.01)*
***B41J 2/19*** *(2006.01)* ***C09D 11/30*** *(2014.01)*

(52) Cooperative Patent Classification (CPC):
**B41J 2/17; B41J 2/19; B41M 5/00; C09D 11/30**

(86) International application number:
**PCT/JP2024/020616**

(87) International publication number:
**WO 2025/004730 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023107804**

(71) Applicant: **Konica Minolta, Inc.**
**Tokyo 100-7015 (JP)**

(72) Inventors:
- **TANABE Itaru**
**Tokyo 100-7015 (JP)**
- **KURAMOCHI Shouhei**
**Tokyo 100-7015 (JP)**
- **KATSUDA Ai**
**Tokyo 100-7015 (JP)**
- **NAKAHARA Issei**
**Tokyo 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **COATING FILM FORMING METHOD**

(57) A coating film forming method according to the present invention is a coating film forming method employing an inkjet head, wherein an inkjet ink contains a polymerizable monomer, a blocked isocyanate, and a photopolymerization initiator, and the method includes: a dewatering step for the ink; and a heating step for bringing the temperature of the ink ejected from the inkjet head to 40°C or higher.

FIG.1

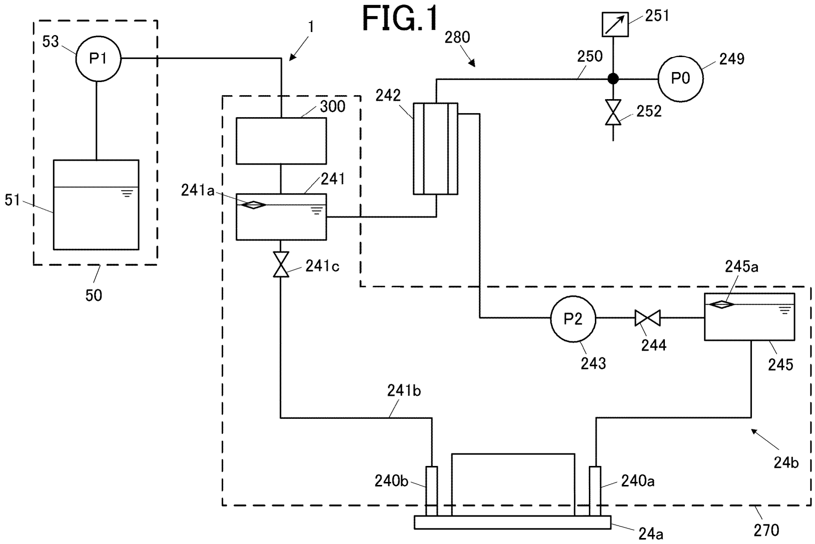


EP 4 737 130 A1

## Description

### Technical Field

The present invention relates to a coating film forming method. The present invention particularly relates to a coating film forming method in which the generation of solid matter in an apparatus and the clogging of a head nozzle are suppressed, and satisfactory ejection properties and stable curability are obtained.

### Background Art

Conventionally, photolithography and screen printing methods have been used for forming etching resists, solder resists, and markings on printed wiring boards.

As an application of the inkjet method to a method for producing a printed wiring board, for example, an inkjet ink containing a thermal curing agent is used for a copper-clad laminate for a printed wiring board. Furthermore, it has already been proposed to form a solder resist with an inkjet printer (see, for example, Patent Documents 1 to 3).

The inkjet method can greatly reduce the number of steps and time and effort as compared with photolithography, which requires a photomask, or screen printing methods using resist ink or marking ink, which require a screen plate. In addition, the inkjet method can reduce the amount of consumables such as developers, various inks, and cleaning solvents, and can also reduce waste water, which can be expected to lead to a cleaner environment.

However, in ink containing the thermal curing agent, in particular, a blocked isocyanate, water or a hydroxy group contained in the ink reacts with the blocked isocyanate to generate solid matter. For this reason, when the ink is ejected from a head by an inkjet method, there is a problem that clogging occurs in a nozzle, which easily causes ejection failure.

In particular, curable ink is usually heated to reduce the ink viscosity before ejection in order to increase the ejection performance of the inkjet, but heating may further accelerate the generation of solid matter.

Therefore, a method of suppressing the water content rate to as low as 500 ppm during the production of ink containing an isocyanate group has been proposed (see, for example, Patent Document 4).

However, the method of suppressing the water content rate to 500 ppm has a large production load, is difficult to maintain and store, and leads to increased costs. In addition, the above method is based on the premise that the ink is used immediately after production.

### Citation List

#### Patent Literature

Patent Document 1: JP 06069300
Patent Document 2: JP 2011-043565 A
Patent Document 3: JP 05969208
Patent Document 4: JP 2014-201593 A


### Summary of Invention

#### Technical Problem

The present invention has been conceived in consideration of the above problems and circumstances. An object of the present invention is to provide a coating film forming method in which the generation of solid matter in an apparatus and the clogging of a head nozzle are suppressed, and satisfactory ejection properties and stable curability are obtained.

Note that, hereinafter, the term "inkjet ink" is also simply referred to as "ink".

#### Solution to Problem

To solve the above problems, the present inventors have investigated the causes of the above problems and the like. The present inventors have found that even when ink containing a blocked isocyanate is used, it is possible to suppress the generation of solid matter in a coating film forming apparatus by ejecting the ink after performing an ink dehydration step.

In other words, the above-described problems according to the present invention are solved by the following means.

1. A coating film forming method using an inkjet head, wherein
an inkjet ink contains a polymerizable monomer, a blocked isocyanate, and a photopolymerization initiator, the method including the steps of:

dehydrating the inkjet ink; and
heating the inkjet ink such that the temperature of the inkjet ink to be ejected from the inkjet head becomes 40°C or higher.

2. The coating film forming method according to item 1, wherein
the heating step is performed in an ink supply path that supplies the inkjet ink to the inkjet head.
3. The coating film forming method according to item 1, wherein
in the dehydration step, a dry gas having a moisture content reduced by a dryer is injected into an ink supply path that supplies the inkjet ink to the inkjet head.
4. The coating film forming method according to item 3, wherein
in the dehydration step, a membrane filter or activated carbon is used for making the dry gas.
5. The coating film forming method according to item 1, further including
a step of degassing the inkjet ink after the dehydration step.
6. The coating film forming method according to item 5, wherein
the degassing step uses a hollow fiber or an ultrasonic wave.
7. The coating film forming method according to item 2, further including,
after the dehydration step, a step of second heating in the ink supply path that supplies the inkjet ink to the inkjet head, in addition to the heating step.

Advantageous Effects of Invention

By the above-described means of the present invention, it is possible to provide a coating film forming method in which, even when ink containing a blocked isocyanate is used, the generation of solid matter in a coating film forming apparatus and the clogging of a head nozzle are suppressed, and satisfactory ejection properties and stable curability are obtained.
Although the mechanisms of occurrence or action of the effects of the present invention have not been clearly understood, these are speculated as follows.
The ink containing a blocked isocyanate generates solid matter by reacting water and a hydroxy group contained in the ink with the blocked isocyanate. In particular, heating such ink accelerates the generation of solid matter. As a result, in a case where solid matter is generated in a coating film forming apparatus, it may lead to ejection failure.
As an estimated mechanism of the generation of solid matter, water and a hydroxy group contained in the ink react with the blocked isocyanate, and the blocked isocyanate (NCO) moiety is hydrolyzed to generate an amine. Furthermore, an amino group and the NCO moiety react with each other to form a multimer in which a binding site is urea. In addition, it is presumed that an alcohol component generated by hydrolysis of an acrylic monomer reacts with the NCO moiety, which leads to multimerization.
For this reason, in the present invention, an ink dehydration step is performed before the ink containing the blocked isocyanate is ejected. Accordingly, the amount of water contained in the ink can be reduced, the reaction of the water and hydroxy group contained in the ink with the blocked isocyanate can be suppressed, and the generation of solid matter can also be suppressed. As a result, the ejection properties of the ink are satisfactory, and stable curability is obtained.
In particular, even in a case where the ink is heated such that the temperature of the ink to be ejected from the inkjet head becomes 40°C or higher, the ejection properties are improved without accelerating the generation of solid matter.

Brief Description of Drawings

[FIG. 1] This is a diagram illustrating an ink channel of an inkjet recording apparatus according to the present embodiment.
[FIG. 2] This is a schematic cross-sectional view of an external perfusion-type degassing module.
[FIG. 3A] This is a schematic cross-sectional view illustrating the configuration of the inside of a central tube of the external perfusion-type degassing module.
[FIG. 3B] This is a schematic cross-sectional view illustrating the configuration of the inside of the central tube of the

external perfusion-type degassing module.

[FIG. 4] This is a front view of a desiccant filter, which is another form of a dehydrator.

Description of Embodiments

The coating film forming method of the present invention is a coating film forming method using an inkjet head, in which ink contains a polymerizable monomer, a blocked isocyanate, and a photopolymerization initiator, and the polymerizable monomer includes the steps of dehydrating the inkjet ink, and heating the ink such that the temperature of the ink to be ejected from the inkjet head becomes 40°C or higher.

This feature is a technical feature common to or corresponding to each of the following embodiments.

In an embodiment of the present invention, it is preferable to perform the heating step in an ink supply path that supplies the inkjet ink to the inkjet head, from the viewpoint that the viscosity of the ink can be reduced and the ejection properties can be improved.

In addition, in the dehydration step, a dry gas having a moisture content reduced by a dryer is preferably injected into the ink supply path that supplies the inkjet ink to the inkjet head, from the viewpoint that injection of the dry gas is simple and that the ink can be reliably dehydrated.

In the dehydration step, it is preferable to use a membrane filter or activated carbon for making the dry gas, from the viewpoint that there is no fluctuation in the physical properties of the ink and no influence on the ejection properties, and that the introduction of an apparatus is easy.

It is preferable to include the degassing step for the inkjet ink after the dehydration step, from the viewpoint that air bubbles due to the dehydration treatment can be removed, which leads to an improvement in the ejection properties.

In the degassing step, it is preferable to use hollow fibers or ultrasonic waves, from the viewpoints that coating film performance can be improved by preventing uneven curing and film deterioration due to oxygen inhibition, and that ejection properties are improved by preventing air bubble defects.

It is preferable to further perform a second heating step in addition to the heating step in the ink supply path that supplies the ink to the inkjet head after the dehydration step, from the viewpoint that the ejection properties become more satisfactory.

Hereinafter, the present invention and constituent element thereof, and modes and aspects for carrying out the present invention will be described. Note that, in the present application, the numerical values before and after "to" are included in the range as the lower limit value and the upper limit value.

1. Overview of Coating Film Forming Method of the Present Invention

The coating film forming method of the present invention is a coating film forming method using an inkjet head, in which the inkjet ink contains a polymerizable monomer, a blocked isocyanate, and a photopolymerization initiator, and the polymerizable monomer includes the steps of dehydrating the inkjet ink, and heating the ink such that the temperature of the ink to be ejected from the inkjet head becomes 40°C or higher.

In the present invention, the term "(meth)acrylate" means acrylate or methacrylate. The term "(meth)acryloyl group" means an acryloyl group or a methacryloyl group, and the term "(meth)acrylic" means acrylic or methacrylic.

The ink used in the present invention functions as an insulating film (solder resist) by being applied to a substrate and then cured with an actinic ray in various fields such as metal processing, electronic circuits, printed circuit boards, plate making, semiconductors, and color filters. In addition, since it can be removed with an alkali after photocuring, it also functions as an etching resist used when forming an etching pattern on a substrate.

Note that the ink can be used not only as the above-described ink for forming a solder resist pattern but also as an adhesive or sealant for electronic components, a circuit protecting agent, or the like.

In particular, the ink according to the present invention is preferably an ink for forming a solder resist pattern used on a printed wiring board. When a solder resist pattern (solder resist film) is formed using the ink according to the present invention, the penetration of oxygen and moisture into the solder resist film can be prevented due to the high curability. Furthermore, the ink according to the present invention can also improve the adhesion at the interface between the copper foil and the solder resist film on the printed wiring board, prevent copper migration, and suppress a decrease in insulating properties.

The ink according to the present invention is an ink curable by an actinic ray.

The term "actinic ray (also referred to as "active energy ray") " refers to a ray that can impart energy to generate reaction initiating species, such as active radicals and ions, in the ink upon irradiation thereof, and includes $\alpha$-rays, $\gamma$-rays, X-rays, ultraviolet rays, and electron beams. Among these, ultraviolet rays and electron beams are preferable, and ultraviolet rays are more preferable, from the viewpoints of curing sensitivity and the availability of an apparatus.

<Dehydration Step and Heating Step>

The coating film forming method according to the present invention includes a dehydration step of dehydrating the ink, and a heating step of heating the ink such that temperature of the ink to be ejected from the inkjet head becomes 40°C or higher.

The order of the dehydration step and the heating step is not particularly limited, but it is preferable to perform the heating step after the dehydration step, from the viewpoint of effectively preventing the generation of solid matter in the ink due to heating. Since the ink according to the present invention contains a blocked isocyanate, the water and hydroxy groups contained in the ink react with the blocked isocyanate to generate solid matter. In particular, in such ink, the generation of solid matter is accelerated by heating. Therefore, dehydrating the ink before heating is effective in preventing the formation of solid matter.

Note that the heating step is preferably performed multiple times, from the viewpoint of ejection properties. As will be described later, the heating step is preferably performed immediately after the dehydration step and after the degassing step, and immediately before the ejection.

The dehydration step and the heating step will be described in detail later.

2. Coating Film Forming Method

The coating film forming method of the present invention preferably includes the following steps (3) to (6) in addition to the dehydration step and the heating step described above. Note that the dehydration step and the heating step may be performed in any order, but in the following description, a case where the heating step is performed after the dehydration step will be described as a preferred embodiment. In addition, as an example of the coating film forming method, a method of forming a resist film will be described:

(1) a step of dehydrating the ink;
(2) a step of heating the ink;
(3) a step of degassing the ink;
(4) a step of ejecting the heated ink from a nozzle of an inkjet head and landing the ink on a printed wiring board on which a circuit has been formed;
(5) a step of irradiating the landed ink with actinic rays to preliminarily cure the ink; and
(6) a step of heating and full curing the ink after the preliminary curing step.

<Step (1)>

The step (1) is a step of dehydrating the ink before ejecting the ink from the inkjet head. Dehydration can prevent the water and hydroxy group contained in the ink from reacting with the blocked isocyanate to generate solid matter.

In the dehydration step, a dry gas having a moisture content reduced by a dryer is preferably injected into an ink supply path. Thus, the dry gas is injected into the ink liquid to dehydrate the ink.

As the dryer, a membrane filter or activated carbon can be used. Examples of the dryer using activated carbon include a filter with activated carbon, and specifically, a desiccant filter, which will be described later, is preferred.

The configuration of the desiccant filter is such that the surface of a sheet-like substrate including a corrugated nonwoven fabric is coated with a dehumidifying agent including activated carbon, details of which will be described later.

The dry gas is preferably a dry gas having a relative humidity of 10% RH or less, more preferably 5% RH or less, and the lower the better. As the dry gas, for example, air, nitrogen, helium, argon, or the like can be used.

By injecting (supplying) the dry gas into the ink supply path, the water content rate of the ink measured by the Karl Fischer method is preferably in the range of 0.05 to 0.60% by mass based on the total mass of the ink. It is preferable that the water content rate satisfy the above range from after (1) the ink dehydration step to immediately before (4) the ink ejection step.

(Measurement Method of Water Content Rate)

The water content rate according to the present invention can be measured by a known method such as the Karl Fischer method.

The method of measuring moisture content by the Karl Fischer method is a method of quantifying moisture content in a substance by utilizing the fact that a Karl Fischer reagent containing iodine, sulfur dioxide, and pyridine specifically reacts with water in the presence of methanol. In particular, the volumetric titration method is a method in which a titration solvent is placed in a titration flask, a sample is dissolved in the titration solvent to extract moisture in the sample, and then the sample is titrated with a Karl Fischer reagent containing iodine, sulfur dioxide, and a base as main

components to determine the moisture content.

Water reacts with iodine and sulfur dioxide in the presence of a base and an alcohol.

$$H_20 + I_2 + SO_2 + CH_3OH + 3RN \rightarrow 2RN \cdot HI + RN \cdot HSO_4CH_3$$

From the above formula, since $H_20$ and $I_2$ react at a ratio of 1:1, the number of milligrams of moisture (titer) per ml of the Karl Fischer reagent is determined in advance with water or a water standard. Then, the moisture content (mg) is calculated from the amount (ml) of titrated Karl Fischer reagent required for the measurement of the sample.

$$\text{Moisture content (mg)} = \text{amount of titrated Karl Fischer reagent (ml)} \times \text{titer (mgH}_2\text{O/ml)}$$

The Karl Fischer reagent is also referred to as a KF reagent.

Then, the water content rate based on the total mass of the ink is calculated from the calculated moisture content.

$$\text{Water content rate (\%)} = (\text{moisture content in ink/total mass of ink}) \times 100$$

Examples of keeping the water content rate within the range of 0.05 to 0.60% by mass include controlling the amount of dry gas supplied or the time for supplying dry gas in the dehydration step. Other examples of controlling the water content rate include controlling the octanol/water partition coefficient (ClogP) value of the polymerizable monomer contained in the ink and controlling the hydroxy value of the ink. In addition, yet other examples of controlling the water content rate include heating the ink.

It is preferable that the amount of the dry gas to be supplied be set in the range of 0.3 to 1.5 L/min, and as for the time for supplying the dry gas, the gas be continuously supplied while the ink is being heated.

The ClogP value of the polymerizable monomer is preferably in the range of 2.0 to 7.0. Furthermore, it is preferable that the polymerizable monomer having a ClogP value in the range of 2.0 to 7.0 be contained in an amount of 30% by mass or more based on the total amount of the ink, from the viewpoint of ejection stability.

The hydroxy value of the ink is preferably within a range of 0.05 to 60 mgKOH/g. In order that the hydroxy value of the ink falls within the above-described range, it is preferable to control the preparation composition of a compound having a hydroxy value contained in the ink or to purify the compound having a hydroxy value. Examples of the compound having a hydroxy value include (meth)acrylate.

<Step (2)>

The step (2) is a step of heating the dehydrated ink. By the heating, droplets of the ink can be ejected in a heated state from the inkjet head. Thus, the ejection stability can be enhanced.

The temperature of the ink at the time of ejection is preferably 40°C or more, and the upper limit is preferably 100°C or less. In order to further enhance the ejection stability, the temperature of the ink at the time of ejection is more preferably in the range of 40 to 90°C. In particular, it is preferable to perform ejection at an ink temperature at which the viscosity of the ink is within a range of 7 to 15 mPa·s, and more preferably within a range of 8 to 13 mPa·s.

As the method for heating the ink, it is preferable to heat so that the temperature of the ink at the time of ejection is 40°C or more in a channel for supplying the ink to the inkjet head.

As the heating method, for example, at least one of an ink supply system such as an ink tank of a head carriage, a supply pipe, and a front chamber ink tank immediately before the head; a pipe with a filter; and a piezo head can be heated by an ink heater.

In particular, in the present invention, the heating step is preferably performed multiple times before ejection. Specifically, as described later, in the ink supply system, it is preferable to heat in a first sub-tank immediately after dehydration. In addition to the heating in the first sub-tank, it is preferable to further heat in a second sub-tank after the degassing and immediately before the ejection from the viewpoint of improving the ejection property.

As the ink heater, a panel heater, a rubber heater, a ribbon heater, warmed water, or the like can be used.

The specific configuration of the ink heater will be described later.

<Step (3)>

The step (3) is a step of degassing in order to remove air bubbles due to dehydration of the ink.

The degassing method preferably uses hollow fibers or ultrasonic waves. The degassing module (degasser) using hollow fibers or ultrasonic waves will be described later.

By the degassing step, the amount of oxygen dissolved in the ink at the temperature at which the ink is ejected preferably falls within the range of 0.1 to 10.0 mg/lppm. The amount of dissolved oxygen more preferably falls within the range of 0.1 to 5.0 mg/lppm, and particularly preferably within the range of 0.05 to 0.60 mg/lppm.

(Method of Calculating Amount of Dissolved Oxygen By Fluorescence Method)

The amount of dissolved oxygen can be measured by a known method such as a fluorescence method.
For example, the method for measuring the amount of dissolved oxygen by a fluorescence method is based on a phosphor electrode and is characterized in that when blue excitation light is applied to a phosphor, the phosphor emits red fluorescence. Since the fluorescence energy of the red fluorescence is absorbed by oxygen molecules, the more the molecular weight of oxygen increases, the more the fluorescence energy is absorbed, and the amount of afterglow of the fluorescence decreases in inverse proportion to the molecular weight of oxygen. In other words, this is a method of quantification by applying the principle that the more the amount of oxygen increases, the more the afterglow decreases.
As described above, the heating step in (2) above is preferably performed again after the degassing step and before the ejection described below, from the viewpoint of ejection properties.

<Step (4)>

In the step (4), the ink droplets are ejected from the inkjet head and landed on the printed wiring board, which is a recording medium, at positions corresponding to a resist film to be formed, to pattern the resist film.
The ejection method from the inkjet head may be either an on-demand method or a continuous method.
The inkjet head of the on-demand method may be any of an electro-mechanical conversion system such as a single cavity type, a double cavity type, a bender type, a piston type, a shearmode type, and a shared wall type, and an electro-thermal conversion system such as a thermal inkjet type and a Bubble Jet (registered trademark) type (Bubble Jet is a registered trademark of Canon Inc).
The droplet amount to be ejected is preferably within the range of 2 to 20 pL from the viewpoint of recording speed and image quality.
The printed wiring board is not specifically limited, but is preferably a copper-clad laminate of any grade (e.g., FR-4) using materials such as paper phenol, paper epoxy, glass cloth epoxy, glass polyimide, glass cloth/nonwoven fabric epoxy, glass cloth/ paper epoxy, synthetic fiber epoxy, fluorine, polyethylene, PPO, cyanate ester, and the like for a copper-clad laminate for a high-frequency circuit. The printed wiring board is also preferably a polyimide film, a PET film, a glass substrate, a ceramic substrate, a wafer plate, a stainless-steel plate, or the like.
The printed wiring board is preferably subjected to fine roughening treatment for increasing the contact area with the ink in order to improve the adhesion with the ink.
When the ink is coated by an inkjet method, it is necessary to reduce the viscosity of the ink in order to eject the ink with an inkjet head. For this reason, the ink before coating includes a polymerizable monomer as a main component, and ink that is cured by actinic rays after coating is used. Such ink tends to cure and shrink at the time of curing after coating, which leads to poor adhesion between the printed wiring board and the ink. Therefore, in order to increase the contact area with the wiring board, it is necessary to perform fine roughening treatment on the wiring board. In addition, since the viscosity of the ink is low, there is a problem in that bleeding occurs on the roughened wiring board. Therefore, it is preferable to perform treatment for adjusting the contact angle after the roughening treatment of the wiring board.
Accordingly, when the ink of the present invention is applied to the above-described purposes, it is preferable to perform roughening treatment or treatment for preventing bleeding as pretreatment of the wiring board.
Examples of roughening treatment methods include treatment (physical polishing treatment) of forming unevenness on the surface of the wiring board by means of buffing, scrubbing, or the like to form a rough surface. In addition, another example of the roughening treatment method includes chemical polishing treatment such as copper chloride-based, persulfate-based, sulfuric acid/hydrogen peroxide, formic acid-based, or organic acid-based ones.
As the roughening treatment method, from the viewpoint of adhesion, a chemical polishing treatment is preferable, and an organic acid-based treatment is more preferable.
Specific examples of the chemical polishing treatment include MultiPrep 200 from MacDermid, Inc. as the copper chloride-based, Microclean, ME-301 and PR-820, from MacDermid, Inc. as the persulfate-based, GB1000F/1400, G200, GB3100, and GB4300 from Shikoku Chemicals Corporation, Metex G-5, Metex G-6, ME-501, ME-602, ME-605, and ME-709 from MacDermid, Inc., BTH-2066 from BOARDTEC, CPE 900, EMR-5000, and EMR-7000 from Mitsubishi Gas Chemical Company, Inc. as the sulfuric acid/hydrogen peroxide, and CZ8100, CZ8101, and CZ8202 from Mec Company Ltd., BTH-2083 and BTH-2085 from BOARDTEC as the organic acid-based.
From the viewpoint of adhesion, a sulfuric acid/hydrogen peroxide-based and an organic acid-based are preferable, and an organic acid-based is more preferable.
As the treatment for preventing bleeding, CL8300 series from MEC Company, Ltd. and BTH-3066 from

BOARDTEC are preferable.

The surface roughness of the copper plate roughened by the above pre-treatment is preferably Ra 0. 1 to 1.5 μm, preferably 0.3 to 1.3 μm, and most preferably 0.4 to 1.1 μm. If Ra is 0.1 μm or more, the adhesion is improved, and if Ra is 1.5 μm or less, bleeding is suppressed.

The thickness of the copper plate to be roughened with the pretreatment agent is preferably 0.1 to 3.0 μm, preferably 0.3 to 2.0 μm, and more preferably 0.5 to 1.5 μm. If the roughening thickness is 0.1 μm or more, the adhesion is improved due to the anchor effect. If the thickness is 3.0 mμ or less, the adhesion is improved because copper is not roughened more than necessary.

The surface roughness can be controlled by adjusting conditions such as the type of the pretreatment agent and the temperature and time of the treatment.

The surface roughness can be measured by a laser microscope, a white light interference microscope, or the like.

<Step (5)>

In the step (5), the ink landed in the step (4) is irradiated with actinic rays to preliminarily cure the ink.

The actinic rays can be selected from, for example, an electron beam, ultraviolet rays, α rays, γ rays, and X-rays, and is preferably ultraviolet rays.

The irradiation with ultraviolet rays can be performed under conditions of wavelength of 300 to 420 nm using, for example, a water-cooled LED manufactured by Phoseon Technology, Inc.

The irradiation with ultraviolet rays is performed such that the peak illuminance of the ultraviolet rays having a wavelength in the range of 300 to 420 nm on the resist film surface preferably falls within the range of 0.5 to 10 W/cm$^2$. The irradiation with ultraviolet rays is more preferably performed so that the peak illuminance of the ultraviolet rays on the resist film surface falls within the range of 1 to 5 W/cm$^2$.

From the viewpoint of suppressing the irradiation of radiant heat to the ink, the amount of light irradiated to the resist film is preferably less than 1000 mJ/cm$^2$.

The irradiation with actinic rays is preferably performed within 0.001 to 300 seconds after the landing of the ink and is more preferably performed within 0.001 to 60 seconds in order to form a highly precise resist film.

<Step (6)>

In the step (6), after the preliminary curing in the step (5), the ink is further heated to perform full curing.

The heating method is, for example, preferably placing it in an oven or the like set within the range of 110 to 180°C for 10 to 60 minutes.

## 3. Coating Film Forming Apparatus

Hereinafter, a coating film forming apparatus used in the coating film forming method of the present invention will be described in detail with reference to the drawings. However, the scope of the present invention is not limited to the illustrated examples. In the following description, components having the same function and configurations are denoted by the same reference numerals, and the description thereof will be omitted.

Examples of the coating film forming apparatus include an inkjet recording apparatus provided with an inkjet head.

The inkjet recording apparatus preferably includes a dehydrator, an ink heater, a degasser, and an inkjet head.

In addition, the inkjet recording apparatus preferably includes an actinic ray irradiation section (UV irradiation section) to irradiate the ink landed on the recording medium with actinic rays.

FIG. 1 is a diagram illustrating an ink channel in an inkjet recording apparatus.

In an inkjet recording apparatus 1, ink pumped from an ink tank 51 of an ink feeder 50 by a feed pump 53 is supplied to each recording head 24a via an ink channel 24b. Furthermore, the inkjet recording apparatus 1 has a configuration in which ink that has not been ejected from each recording head 24a can be returned to the ink channel 24b as necessary.

A dehydrator (dehydration device) 300, a first sub-tank 241, a degasser 280, a liquid feed pump 243, a check valve 244, a second sub-tank 245, and the like are provided on the ink channel 24b.

The recording head 24a, the ink channel 24b, and each constituent element on the ink channel 24b are heated and kept warm by an ink heater (ink heating device) 270 so that the temperature of the ink is maintained at an appropriate temperature. Specifically, the ink heater 270 heats the recording head 24a, the ink channel 24b, and each constituent element on the ink channel 24b so that the ejection temperature of the ink becomes 40°C or more.

<Ink Heater>

The ink heater 270 is preferably provided at least in one of the following locations among the recording head 24a and the constituent elements on the ink channel 24b: before the dehydrator 300, between the dehydrator 300 and the degasser 280 (degassing module 242), and between the degasser 280 and the recording head 24a. Furthermore, the ink heater 270 may be provided in the degasser 280.

From the viewpoint of preventing the formation of solid matter due to heating, the ink heater 270 is preferably provided after the dehydrator 300 and is preferably provided between the dehydrator 300 and the degasser 280.

Furthermore, although the ink may be ejected from the recording head 24a immediately after the ink has been degassed, it is preferable to further provide an ink heater 270 between the degasser 280 and the recording head 24a in order to eject the ink more stably from the viewpoint of preventing an increase in pressure loss.

In the following description, a case where the ink heater 270 is provided in the first sub-tank 241 after the dehydrator, the second tank 247 between the dehydrator 300 and the degasser 280, and the degasser 280 will be described, but the configuration is not limited thereto.

The ink heater 270 is formed of a heater, a heat transfer member to transfer heat from the heater, and the like. In addition, the ink heater 270 may be configured using heated water.

As the heater, for example, a heating wire is used, which generates Joule heat when energized. In addition, examples of such a heater include a panel heater, a ribbon heater, and a rubber heater. As the heat transfer member, a member having a high heat conductivity, for example, a heat conduction plate formed of various metals (alloys) is used.

The heater and the heat transfer member are provided, for example, so as to cover piping of the ink channel 24b or to be in contact with sidewalls or the like of the first sub-tank 241 and the second sub-tank 245.

<Dehydrator>

The dehydrator 300 dehydrates the ink pumped from the ink tank 51 by the feed pump 53, thereby preventing solid matter from being generated in the ink heated in a later process. In other words, when the ink of the present invention is heated, water and a hydroxy group contained in the ink react with the blocked isocyanate to generate solid matter, but dehydration prevents generation of such solid matter. As a result, ejection failure of ink is also prevented.

The dehydrator 300 has any configuration as long as it can supply dry gas having a moisture content reduced by a dryer, to ink.

Specific examples of the dryer include those using a membrane filter or activated carbon.

Examples of those using a membrane filter include a membrane-type dehumidifier and a general-purpose compressor. Commercially available dehumidifiers can be used, and examples thereof include an SMC membrane-type dehumidifier IDG5-02B-PS.

Examples of those using activated carbon include a filter with activated carbon, and more specifically, a desiccant filter, which will be described later.

Then, the dry gas subjected to the dehydration treatment by such a dryer is injected into the ink supply path, so that the dry gas is injected into the ink liquid and the ink liquid is dehydrated.

The relative humidity of the dry gas is preferably 10% RH or less.

The supply flow rate of the dry gas to the ink is preferably in the range of 0.3 to 1.0 ml/min, in which the generation and defoaming of air bubbles at the ink interface are balanced. The time for supplying the dry gas is preferably 1 to 12 hours.

FIG. 4 is a front view of a desiccant filter.

A desiccant filter 301 is formed by coating a surface of a sheet-like substrate 302 with a dehumidifying agent 303.

The substrate 302 includes a corrugated nonwoven fabric and a conductive polymer which is a conductive material impregnated in the nonwoven fabric.

The dehumidifying agent 303 contains activated carbon.

A conductive wire 4, which is a conducting member for supplying electric power, is connected to the substrate 302 containing the conductive polymer. The conductive wire 304 is connected to an external power source 305.

The conductive member is not limited to the conductive wire 304, and various known conductive members can be used.

The desiccant filter 301 having such a configuration is disposed inside the dehydrator 300 together with the external power source 305.

The desiccant filter 301 adsorbs moisture in the ink by the dehumidifying agent 303 and then allows the ink with reduced moisture to pass therethrough.

When the moisture content adsorbed by the dehumidifying agent 303 of the desiccant filter 301 increases, it is preferable to perform a regeneration treatment of the desiccant filter 301.

In a method for regenerating the desiccant filter 301, electric power is supplied to the conductive polymer in the

substrate 302 from the external power source 305 via the conductive wire 304. The conductive polymer to which the electric power has been supplied generates heat, and the temperature of the substrate 302 rises. When the temperature of the substrate 302 reaches a temperature at which moisture can be desorbed, the moisture adsorbed by the dehumidifying agent 303 is desorbed. As a result, the moisture adsorption capability of the dehumidifying agent 303 is recovered, and the dehumidifying agent 303 is regenerated to a state capable of sufficiently absorbing moisture, that is, a state capable of dehumidifying.

The nonwoven fabric is preferably made of, for example, aramid fiber, cellulose fiber, nylon fiber, vinylon fiber, glass fiber, polyester fiber, polyethylene fiber, polypropylene fiber, polyolefin fiber, rayon fiber, or the like.

The substrate 302 may include a sheet-like member other than a nonwoven fabric (e.g., a woven fabric or a resin film) and a conductive material.

Examples of the conductive polymer include polythiophene, which is used in organic electronics and the like.

In the present invention, as the conductive polymer to be impregnated in the nonwoven fabric, for example, PEDOT: PSS (a composite formed of poly(3,4-ethylenedioxythiophene) and polystyrene sulfonic acid) can be suitably used.

It is known that poly(3,4-ethylenedioxythiophene) doped with a conductive polymer poly(4-styrene sulfonic acid) is colloidally dispersible in water and can be made into a film even with the polymer alone. Furthermore, in order to improve the conductivity, about 1 to 3% of a high-boiling-point solvent, such as dimethyl sulfoxide, N-methyl-2-pyrrolidone, glycerin, or ethylene glycol, may be added to the water-dispersed conductive material.

The dehumidifying agent preferably contains activated carbon. The dehumidifying agent 253 is activated carbon fused with zeolite 4A or an aluminosilicate-carbon composite, as disclosed in Japanese Patent Laid-Open No. 2017-222547 or Japanese Patent Laid-Open No. 2018-30122.

This activated carbon is obtained through the following steps (a) to (d):

(a) a step of calcining a silicic acid plant in an inert atmosphere at 400°C or more to prepare a silica-carbon composite;
(b) a step of producing a mixture containing the silica-carbon composite, an Al compound, an alkali-metal compound or an alkaline-earth metal compound, and water so that an aluminosilicate has a molar ratio of Si: Al in the range of 1:0.1 to 1.2;
(c) a step of subjecting the mixture to a hydrothermal reaction to obtain a porous aluminosilicate-carbon composite; and
(d) a step of subjecting the porous aluminosilicate-carbon composite to inert gas treatment at 600 to 800°C.

This activated carbon can desorb moisture at a temperature of about 50°C to 100°C.

The method for producing the desiccant filter includes, first, immersing a corrugated nonwoven fabric in a water-dispersion solution of PEDOT: PSS, which is a conductive polymer. Thereafter, the nonwoven fabric is taken out from the solution and is left to dry for about 10 to 20 hours. As such, the substrate 302 formed of the nonwoven fabric impregnated with the conductive polymer is produced.

On the other hand, as described above, activated carbon is produced through the steps (a) to (d).

The activated carbon thus produced is ground in a mortar, then mixed with a water-soluble binder, and stirred until uniformly dispersed. Thereafter, water is added in a plurality of batches to produce a paste-like activated carbon solution. The activated carbon solution is applied to the surface of the substrate 302 formed of a nonwoven fabric impregnated with a conductive polymer to form a layer of the dehumidifying agent (activated carbon).

Thereafter, the substrate and the dehumidifying agent are dried at room temperature. Then, a conductive wire is connected to the substrate.

As described above, a desiccant filter having a configuration in which the surface of the corrugated nonwoven fabric impregnated with the conductive polymer is coated with the activated carbon and having a high specific surface area is obtained.

Note that the substrate 302 is not limited to the corrugated shape and may have various shapes such as a pleated shape and a planar shape. However, the substrate 302 preferably has a shape that does not impair air permeability.

<First Sub-Tank>

The first sub-tank 241 is an ink chamber that has a smaller volume than one or more of the ink tanks 51 storing the ink dehydrated by the dehydrator 300.

A first float sensor 241a is provided in the first sub-tank 241. The first sub-tank 241 stores a predetermined amount of ink therein as a controller (not illustrated) operates the feed pump 53 based on detection data of a liquid level position by the first float sensor 241a.

In the first sub-tank 241, the ink heater 270 is preferably provided. The ink in the first sub-tank 241 is heated by the ink heater 270, so that the viscosity of the ink at the time of ejection can be adjusted.

The ink heater 270 preferably heats the ink such that the temperature of the ink at the time of ejection becomes 40°C or more, and preferably heats the ink such that the temperature of the ink in the first sub-tank 241 becomes 40 to 60°C.

The ink heater 270 is preferably provided in contact with the sidewall, the bottom wall, or the like of the first sub-tank 241.

The temperature control of the ink heater 270 is performed by the controller.

The controller performs on/off control with a value appropriately set according to the type of liquid as a target temperature, while detection of the temperature of the ink heater 270 by a thermocouple built into the ink heater 270 is performed, for example.

<Degasser>

The degasser 280 performs a degassing treatment for removing gas such as air from the ink that has flowed in and discharges the degassed ink.

The degasser preferably has a configuration using a hollow fiber membrane or ultrasonic wave. Hereinafter, a degasser using a hollow fiber membrane and a degasser using an ultrasonic wave will be described. Note that although the degasser 280 shown in FIG. 1 is illustrated as using a hollow fiber membrane, it is possible to change to a configuration using ultrasonic waves.

(Degasser Using Hollow Fiber Membrane)

The degasser 280 includes a degassing module 242, a vacuum pump 249, a vacuum path 250, a pressure sensor 251, an air release valve 252, and the like.

The degassing module 242 is an external perfusion-type degassing module having therein a hollow fiber membrane as a gas permeable membrane capable of permeating a dissolved gas in a liquid.

The vacuum pump 249, the vacuum path 250, the pressure sensor 251, and the air release valve 252 are connected to the degassing module 242.

The vacuum pump 249 reduces the air pressure in the degassing module 242.

The vacuum path 250 connects the vacuum pump 249 and the degassing module 242.

The pressure sensor 251 measures the air pressure in the vacuum path 250.

The air release valve 252 is a valve capable of switching the inside of the vacuum path 250 between an airtight state and an air release state.

Referring to FIG. 2, the degassing module 242 of the degasser 280 will be described in detail. In the example illustrated in FIG. 2, the external perfusion-type degassing module 242 is illustrated.

The degassing module 242 is formed in, for example, a cylindrical shape, removes (degasses) dissolved gas in the ink that has flowed in, and ejects the degassed ink.

The degassing module 242 has a configuration in which a large number of hollow fiber membranes (gas permeable membranes) 2426 cover the periphery of a central tube 2424 inside an outer shell (chamber) 2421. One end of the central tube 2424 is connected to an ink inlet port 2422, and the other end is sealed by a plug 2424a.

Countless fine holes (hole portions) 2424b (perforation holes) are provided on the outer wall of the central tube 2424. The ink flowing in from the ink inlet port 2422 flows out to the periphery from these fine holes 2424b and flows out from an ink outlet port 2423.

Note that, in the example shown in FIG. 2, the ink outlet port 2423 is provided horizontally, and is configured so that the ink flows out to the side of the degassing module 242. However, the present invention is not limited to this configuration, and the ink outlet port 2423 may be provided in any direction and may be configured such that ink flows out in any direction. Furthermore, providing the ink outlet port 2423 at a position corresponding to the upper end portion of the hollow fiber membrane 2426 as illustrated in FIG. 2 is preferable because no air pocket is formed in the chamber.

The hollow fiber membrane 2426 has a large number of hollow fine fiber structures with one end closed, and the membrane surface has gas permeability. The other end of the fine fiber structure of the hollow fiber membrane 2426 is connected to a gas outlet port 2425 to which the vacuum path 250 is connected. The inside of the hollow fiber membranes 2426 is depressurized by the suction with the vacuum pump 249. In this state, ink comes into contact with the membrane surface of the hollow fiber membrane 2426, and thus only a dissolved gas in the ink selectively permeates the membrane surface to degas the ink. The dissolved gas that has passed through the hollow fiber membrane 2426 flows down the vacuum path 250.

FIG. 3A is a schematic cross-sectional view illustrating the configuration of the inside of the central tube of the external perfusion-type degassing module. FIG. 3B is a cross-sectional view taken along line IVB-IVB of FIG. 3A.

The degassing module 252 preferably has a heater 2427 (ink heater) inside the central tube 2424.

The heater 2427 is configured to have, for example, a heating wire and a thermocouple inside a rod-shaped

member made of SUS.

In this manner, since the heater 2427 is disposed at the central portion in the degassing module 242, the ink in the degassing module 242 can be uniformly and efficiently heated, and the ink can be heated to a target temperature in a short time. In addition, since the entire ink in the degassing module 242 can be uniformly heated, it is possible to prevent the occurrence of an area in which the ink is not locally heated in corners of the degassing module 242. In this way, since it is possible to uniformly and efficiently heat the ink, it is possible to improve the degassing efficiency and the feeding amount of the ink, to sufficiently reduce the viscosity of the ink, and to suppress the occurrence of non-ejection of the ink.

The temperature control of the heater 2427 is performed by the controller.

The controller performs on/off control with a value appropriately set according to the type of liquid as a target temperature, while detection of the temperature of the heater 2427 by a thermocouple built into the heater 2427 is performed, for example.

Note that the heater 2427 may have any shape and configuration as long as the ink in the degassing module 242 can be heated and the heating temperature can be controlled. Further, the shape and configuration of the heater 2427 may be such that the heater 2427 itself generates heat as described above. The heater 2427 may have, for example, a configuration in which a heating element itself is provided outside the degassing module 242 and the heat of the heating element is transferred to the heater 2427 to heat the inside of the degassing module 242.

Furthermore, a second heater 2428 (ink heater) that heats the liquid in the degassing module 242 is provided on the outer surface of the degassing module 242.

In other words, the second heater 2428 is formed in a planar shape and is provided so as to cover the outer periphery surface of the outer shell 2421 of the degassing module 242. As such a second heater 2428, for example, a rubber heater or the like is used.

A temperature sensor such as, for example, a thermistor (not shown), is provided in the second heater 2428, and on/off control is performed by the controller in the same manner as the heater 2427. Since such a second heater 2428 is provided, the ink in the degassing module can be heated to a target temperature in a shorter time.

The vacuum pump 249 illustrated in FIG. 1 is a diaphragm pump including a pump chamber and a drive source.

The pump chamber includes a stretchable diaphragm.

The drive source operates the diaphragm so that the volume of the pump chamber expands and contracts.

The pump chamber includes a suction port having a check valve that allows only inlet of a fluid from the outside, and a discharge port having a check valve that allows only discharge of a fluid from the inside.

The pressure sensor 251 detects the air pressure in the vacuum path 250 and outputs the detection result to the controller. The controller drives and controls the vacuum pump 249 based on the detection result from the pressure sensor 251.

The air release valve 252 is a solenoid valve capable of switching the vacuum path 250 between an airtight state and an air release state in accordance with an operation command from the controller.

The liquid feed pump 243 feeds the ink flowing out from the ink outlet port 2423 of the degassing module 242 to the second sub-tank 245. A check valve 244 is provided between the liquid feed pump 243 and the second sub-tank 245 to prevent the ink once fed to the second sub-tank 245 from flowing backward.

Note that although the degassing module 242 described above is an external perfusion-type hollow fiber membrane degassing module from the viewpoints of preferable degassing efficiency and processing flow rate, the degassing module 242 is not limited to this and other types such as an internal perfusion-type may be used.

In addition, as the external perfusion-type hollow fiber degassing module, a commercially available product can also be used. Examples of the commercially available product include SEPARELEF-002A-P and SEPARELEF-004P manufactured by Dainippon Ink and Chemicals, Inc.

(Degasser Using Ultrasonic Waves)

The degasser may be of a type that uses ultrasonic waves for degassing.

By performing degassing using ultrasonic waves, degassing can be performed without heating the ink, which makes it possible to prevent the generation of solid matter and to increase the fluidity of the ink as well.

The method of irradiating the ink with ultrasonic waves is not particularly limited. As a method of irradiating with ultrasound waves, for example, an ultrasonic transducer that generates ultrasonic waves is provided in the ink tank for degassing treatment. Then, the ultrasonic transducer is driven in a state where ink is contained in the ink tank, so that the ink can be irradiated with ultrasonic waves.

An ultrasonic transducer may be provided inside the ink tank for degassing treatment so as to directly irradiate the ink with ultrasonic waves. Alternatively, the ultrasonic waves may be indirectly irradiated through a wall of the ink tank or another liquid by providing an ultrasonic transducer outside the tank for the degassing treatment.

In a case of providing an ultrasonic transducer inside the ink tank in which degassing is performed, loss of ultrasonic waves is reduced when ultrasonic waves are generated in a state where the ultrasonic transducer is entirely or

partially immersed in the ink. Therefore, it is possible to degas the ink with less energy.

When the ink is irradiated with ultrasonic waves, the ink vibrates, and thus so-called cavitation occurs in which gases dissolved in the ink aggregate and precipitate as air bubbles. Since the air bubbles precipitated due to the cavitation rise to the surface of the ink and go out of the ink, the amount of the gas dissolved in the ink decreases.

In addition, the ink irradiated with ultrasonic waves has good fluidity even without heating. It is considered that this is because the ink vibrates when irradiated with the ultrasonic waves, and thus the aggregation of an gelling agent is eliminated and the gelling agent is dispersed. In particular, in a case of using a crystalline gelling agent, the gelling agent is crystallized to form a mass having a large volume in the ink in a state where the temperature of the ink is low, and therefore, the fluidity of the ink may deteriorate. On the other hand, in the present invention, it is considered that the fluidity of the ink can be improved even without heating since the crystal structure of the gelling agent is collapsed by the irradiation with ultrasonic waves and the gelling agent is dispersed in the ink.

In order to secure the fluidity of the ink, the viscosity of the ink after being irradiated with ultrasonic waves is preferably in the range of 50 to 300 mPa·s at 30°C.

The oscillation frequency and irradiation energy of the ultrasonic waves can be appropriately set according to the composition, viscosity, or the like of the ink.

When the oscillation frequency and the irradiation energy of the ultrasonic waves are set such that the ultrasonic waves are spread throughout the ink without being attenuated, the entire ink can be sufficiently degassed. Furthermore, the oscillation frequency and the irradiation energy of the ultrasonic waves can also be set such that the viscosity of the ink after the irradiation with the ultrasonic waves is in the range of 50 to 300 mPa·s at 30°C. Furthermore, for example, the oscillation frequency and the irradiation energy of the ultrasonic waves can also be set such that the amount of oxygen dissolved in the degassed ink is within the range of 0.1 to 10.0 mg/lppm.

The oscillation frequency of the ultrasonic waves with which the ink is irradiated can be in the range of 5 to 50 kHz and is preferably in the range of 10 to 30 kHz. When the oscillation frequency is set to 5 kHz or more, degassing can be sufficiently performed, and when the oscillation frequency is set to 50 kHz or less, aggregation of the color material due to vibration is less likely to occur. In addition, by setting the oscillation frequency of the ultrasonic waves in the range of 10 to 30 kHz, the aggregation of the color material is less likely to occur. Therefore, the gloss in the image can be made uniform, and white streaks can be made less likely to occur in the image.

Furthermore, the irradiation energy of the ultrasonic waves with which the ink is irradiated can be in the range of $1 \times 10^4$ to $1 \times 10^5$ J and is preferably in the range of $2 \times 10^4$ to $8 \times 10^4$. When the irradiation energy is set to $1 \times 10^4$ J or more, degassing can be sufficiently performed, and when the irradiation energy is set to $1 \times 10^5$ J or less, aggregation of the color material due to vibration can be prevented.

When the ink is irradiated with ultrasonic waves, the pressure in the ink tank where degassing is performed may be normal pressure but may be reduced pressure. By reducing the pressure in the ink tank in which the degassing is performed, air bubbles tend to go out of the ink.

The internal pressure of the ink tank in which degassing is performed when the ink is irradiated with ultrasonic waves can be, for example, in the range of 0 to 1 atm (in the range of 0 to 101.3 kPa).

The temperature of the ink when the ultrasonic waves are irradiated is preferably a temperature that is equal to or higher than the freezing point of the ink and is lower than the gelation temperature of the ink.

By setting the temperature of the ink when the ink is irradiated with ultrasonic waves to be lower than the gelation temperature, it is possible to suppress volatilization of the photocurable compound from the ink which has been liquefied (solated) by heating, and deterioration of the photocurable compound due to heating.

The temperature of the ink is preferably lower than the gelation temperature by 10°C or more, and more preferably 20°C or more.

By irradiating the ink with ultrasonic waves at a temperature equal to or lower than the gelation temperature of the ink, the ink can be degassed without including a step of heating the ink, when the ink is stored near room temperature or cooled.

In order to facilitate introduction of the ink before degassing into the ink tank in which degassing is performed, the ink before degassing may be heated to impart fluidity. Also at this time, it is preferable to adjust the energy to be applied to the ink at the time of heating so that the temperature of the ink does not exceed the gelation temperature.

In addition, the ink vibrates due to the irradiation of the ultrasonic waves, and the temperature of the ink may rise due to the energy of the vibration. Therefore, it is also preferable to adjust the oscillation frequency and the irradiation energy of the ultrasonic waves so that the temperature of the ink does not exceed the gelation temperature.

<Second Sub-Tank>

The second sub-tank 245 is a small ink chamber in which the ink degassed by the degasser 280 is temporarily stored. The second sub-tank is not particularly limited but has substantially the same capacity as the first sub-tank 241.

The ink in the second sub-tank 245 is connected to an inlet 240a of each recording head 24a, and the ink is

supplied to each recording head 24a in an amount corresponding to the amount of ink ejected from the nozzle.

A second float sensor 245a is provided in the second sub-tank 245. Based on detection data of the liquid level position by the second float sensor 245a, the controller operates the liquid feed pump 243 to store a predetermined amount of ink.

Similarly to the first sub-tank 241, the ink heater 270 is preferably provided in the second sub-tank 245. The ink in the second sub-tank 247 is heated by the ink heater 270, so that the viscosity of the ink at the time of ejection can be adjusted.

The ink heater 270 preferably performs heating such that the temperature of the ink at the time of ejection becomes 40°C or more, and preferably performs heating such that the temperature of the ink in the second sub-tank 247 becomes 40 to 60°C.

The ink heater 270 is preferably provided in contact with the sidewall, the bottom wall, or the like of the second sub-tank 247.

The temperature control of the ink heater 270 is performed by the controller.

The controller performs on/off control with a value appropriately set according to the type of liquid as a target temperature, while detection of the temperature of the ink heater 270 by a thermocouple built into the ink heater 270 is performed, for example.

Ink that has not been ejected from the nozzles of the recording head 24a can be returned from an outlet 240b to the first sub-tank 241 via a recovery path 241b and a valve 241c. For example, when ink needs to be drained from the ink channel 24b for maintenance of the recording head 24a or the like, the ink in the recording head 24a can be recovered without being discarded by opening the valve 241c.

The controller controls the operation of each portion of the inkjet recording apparatus 1 and supervises the entire operation. The controller includes a central processing unit (CPU), a read only memory (ROM), a random-access memory (RAM), and the like.

In the controller, various processing programs such as a system program stored in the ROM are read out and developed in the RAM, and the program developed in the RAM is executed by the CPU. Thus, for example, various control processes such as an image formation processing and the above-described temperature control are executed.

In the inkjet recording apparatus having the above-described configuration, the ink in the ink path 24b is heated and kept warm by the ink heater 270 and is set to have an ink temperature of 40°C or more when ejected from the recording head.

In the above-described inkjet recording apparatus 1, the ink heaters 270 are provided in the first sub-tank 241, the second sub-tank 247, and the degassing module 242, but, without limitation thereto, may be provided before the dehydrator 250. Further, the ink heater 270 may be provided by incorporating a heater in the recording head 24a.

Furthermore, the degasser 280 is provided after the first sub-tank 241 and degasses after heating, but, without limitation thereto, may be provided before the first sub-tank 241 and degas before heating.

Note that the ink ejected from the nozzle is irradiated with actinic rays by an actinic ray irradiation section.

The actinic ray irradiation section includes, for example, a fluorescent tube, such as a low-pressure mercury lamp, and causes the fluorescent tube to light emission to irradiate with energy rays such as ultraviolet rays.

Examples of fluorescent tubes that emit ultraviolet rays include, in addition to low-pressure mercury lamps, mercury lamps having operating pressures of about several hundred Pa to 1 MPa. Examples of the fluorescent tube also include a light source usable as a germicidal lamp, a cold-cathode tube, an ultraviolet laser light source, a metal halide lamp, and a light-emitting diode. Among these, a light source (for example, a light-emitting diode or the like) capable of irradiating with ultraviolet rays with higher illuminance and having low power consumption is more desirable. In addition, the energy rays are not limited to the ultraviolet rays and may be any energy rays as long as these have a property of curing the ink according to the properties of the ink, and the light source is also replaced according to the wavelength of the energy rays, or the like.

## 4. Configuration of Ink

The ink used in the coating film forming method of the present invention contains a polymerizable monomer, a blocked isocyanate, and a photopolymerization initiator.

Hereinafter, the polymerizable monomer, the blocked isocyanate, the photopolymerization initiator, and the like will be described.

### <Polymerizable Monomer>

The polymerizable monomer according to the present invention is a monofunctional (meth)acrylate or a polyfunctional (meth)acrylate.

The monofunctional (meth) acrylate compound is a compound having one (meth)acrylate group in one molecule.

Specific examples of the monofunctional (meth)acrylate compound include glycidyl (meth)acrylate, 3,4-epoxycyclohexyl (meth)acrylate, methylglycidyl (meth)acrylate, 3-methyl-3-(meth)acryloxymethyloxetane, 3-ethyl-3-(meth)acryloxymethyloxetane, 3-methyl-3-(meth)acryloxyethyloxetane, 3-ethyl-3-(meth)acryloxyethyloxetane, 2-phenyl-3-(meth)acryloxymethyloxetane, 2-trifluoromethyl-3-(meth)acryloxymethyloxetane, 4-trifluoromethyl-2-(meth)acryloxymethyloxetane, (meth)acrylic acid, methyl (meth)acrylate, ethyl (meth)acrylate, isopropyl (meth)acrylate, butyl (meth)acrylate, iso-butyl (meth)acrylate, t-butyl (meth)acrylate, cyclohexyl (meth)acrylate, benzyl (meth)acrylate, tricyclo[5.2.1.0$^{2,6}$] decanyl (meth)acrylate, dicyclopentenyloxyethyl (meth)acrylate, isobornyl (meth)acrylate, phenyl (meth)acrylate, glycerol mono (meth)acrylate, tetrahydrofurfuryl (meth)acrylate, (meth)acrylate of ethylene oxide adduct of lauryl alcohol, succinic acid mono[2-(meth)acryloyloxyethyl], maleic acid mono[2-(meth)acryloyloxyethyl], 2-hydroxyethyl (meth)acrylate, 2-hydroxypropyl (meth)acrylate, 4-hydroxybutyl (meth)acrylate, or 1,4-cyclohexanedimethanol mono(meth)acrylate, n-butyl (meth)acrylate, stearyl (meth)acrylate, lauryl (meth)acrylate, isodecyl (meth)acrylate, tridecyl (meth)acrylate and 2-(2-ethoxyethoxy)ethyl (meth)acrylate.

In the present invention, the "polyfunctional monomer" refers to a compound having two or more functional groups. Examples of the functional group include an acryloyl group, a methacryloyl group, an allyl group, a vinyl group, and a vinyl ester group, each of which has an ethylenically unsaturated bond, from the viewpoint of curing by radical polymerization. Note that the functional group is not limited to those described above.

The polymerizable monomer used in the present invention preferably contains a polyfunctional monomer, from the viewpoint of the physical properties of the coating film.

Examples of bifunctional acrylates include triethylene glycol diacrylate, tetraethylene glycol diacrylate, polyethylene glycol diacrylate, dipropylene glycol diacrylate (DPGDA), tripropylene glycol diacrylate, polypropylene glycol diacrylate, 1,4-butanediol diacrylate, 1,6-hexanediol diacrylate, 1,9-nonanediol diacrylate, neopentyl glycol diacrylate, propylene oxide (PO) adduct diacrylate of bisphenol A, hydroxypivalic acid neopentyl glycol diacrylate, polytetramethylene glycol diacrylate, tricyclodecanedimethanol dimethacrylate, and tricyclodecanedimethanol diacrylate.

Examples of acrylates having three or more functional groups include trimethylolpropane triacrylate, pentaerythritol triacrylate, pentaerythritol tetraacrylate, dipentaerythritol hexaacrylate, ditrimethylolpropane tetraacrylate, glycerin propoxy triacrylate, and pentaerythritol ethoxy tetraacrylate.

Among the above acrylates, phenoxyethyl acrylate, o-phenylphenol acrylate, and 2-hydroxy-3-phenoxypropyl acrylate are preferable from the viewpoint of suppressing curing shrinkage.

From the viewpoint of rapid curability, neopentyl glycol diacrylate, tricyclodecane dimethanol diacrylate, PO adduct diacrylate of bisphenol A, and hydroxypivalic acid neopentyl glycol diacrylate are preferable.

The acrylate may be a modified product.

Examples of modified acrylates include ethylene oxide-modified acrylates such as ethylene oxide-modified trimethylolpropane triacrylate and ethylene oxide-modified pentaerythritol tetraacrylate; propylene oxide-modified acrylates such as propylene oxide-modified trimethylolpropane triacrylate and propylene oxide-modified pentaerythritol tetraacrylate; caprolactone-modified acrylates such as caprolactone-modified trimethylolpropane triacrylate; and caprolactam-modified acrylates such as caprolactam-modified dipentaerythritol hexaacrylate.

(Polyfunctional (Meth)acrylate with ClogP Value in the Range of 2.0 to 7.0)

The ink of the present invention preferably contains a polymerizable monomer having an octanol/water partition coefficient (ClogP) value in the range of 2.0 to 7.0. In other words, the ink of the present invention preferably contains a polyfunctional (meth)acrylate having a ClogP value in the range of 2.0 to 7.0.

When the ClogP value is in the range of 2.0 to 7.0, an amine derived from the blocked isocyanate hydrolyzed by moisture in the ink or a hydrolysate of the (meth)acrylate reacts with components in the ink to form a reaction product. Then, since the solubility of the formed reaction product is improved, it is possible to suppress a cured product or a foreign substance from being eluted as a solid, and the ejection stability is improved.

Examples of the polyfunctional (meth)acrylate monomer with a ClogP value in the range of 2.0 to 7.0 include EO-modified trimethylolpropane triacrylate (ClogP of 4.0), dipropylene glycol diacrylate (ClogP of 2.0), 1,10-decanediol dimethacrylate (ClogP of 5.75), tricyclodecanedimethanol diacrylate (ClogP of 4.69), and tricyclodecanedimethanol dimethacrylate (ClogP of 5.12).

As the polyfunctional (meth)acrylate according to the present invention, the following polyfunctional (meth) acrylates can also be used.

[Chemical Formula 1]

| Monomer | CLogP | Structure |
|---|---|---|
| A | 2.17 | 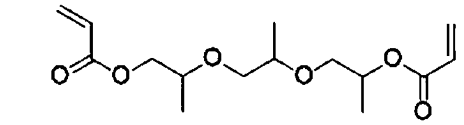 |
| B | 1.86 | 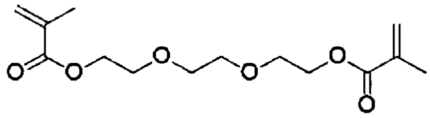 |
| C | 1.52 | 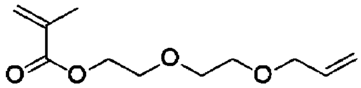 |
| D | 4.9 | 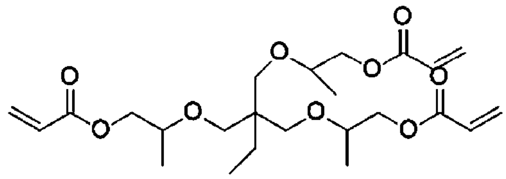 |
| E | 3.02 | 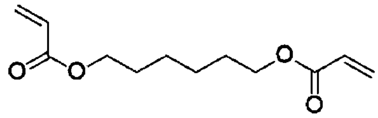 |
| F | 6.81 | 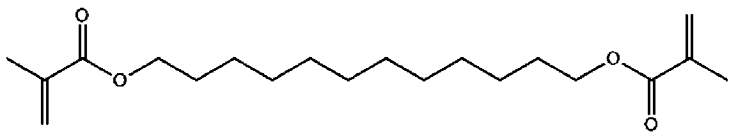 |
| G | 7.34 | 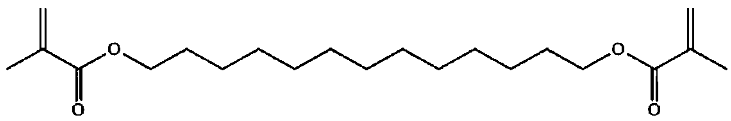 |

In addition, a polyfunctional (meth)acrylate monomer with a ClogP in the range of 2.0 to 7.0 is preferably contained in an amount of 30% by mass or more based on the entire ink, from the viewpoint of the ejection stability. In particular, the ink of the present invention preferably contains a polyfunctional (meth)acrylate monomer with a ClogP value in the range of 2.0 to 7.0 in an amount in the range of 30 to 50% by mass based on the entire ink.
In the present invention, the "ClogP value" is a logP value calculated by calculation.
The ClogP value can be calculated by a fragment method, an atomic approach method, or the like. More specifically, in order to calculate the ClogP value, the fragment methods described in the following document or the following commercially available software package 1 or 2 may be used.
Document: C. Hansch and A. Leo, "Substituent Constants for Correlation Analysis in Chemistry and Biology" (John Wiley & Sons, New York, 1969)

Software package 1: MedChem Software (Release 3.54, August 1991, Medicinal Chemistry Project, Pomona College, Claremont, CA, and
Software package 2: Chem Draw Ultra ver. 20.0.0.47 (PerkinElmer Informatics)
The numerical values of the ClogP values described in the present specification and the like are "ClogP values" calculated using the software package 2.

(Bisphenol A Structure)

The polyfunctional (meth)acrylate preferably has at least one bisphenol A structure.
The polyfunctional (meth)acrylate monomer having a bisphenol A structure is preferably, for example, the above-described PO adduct diacrylate of bisphenol A, EO-modified bisphenol A diacrylate, or bisphenol A-type epoxy acrylate.

(Hydroxy Value)

The sum of the hydroxy values of the compounds having a hydroxy group contained in the ink of the present invention is preferably within the range of 0.05 to 60 mgKOH/g. When the hydroxy value falls within the above range, the generation of solid matter is suppressed even in a state where the ink contains water, and the storage stability is excellent.
Examples of means for setting the hydroxy value within the range of 0.05 to 60 mgKOH/g include appropriately selecting a compound having a hydroxy value to be contained in the ink, controlling the preparation composition of a compound having a hydroxy value, and purifying a compound having a hydroxy value.
In the present invention, the term "hydroxy value" refers to the amount (mg) of potassium hydroxide (KOH) required to neutralize acetic acids bonded to hydroxy groups when 1 g of the ink of the present invention is acetylated.
The hydroxy value can be calculated according to the method described in JIS K0070-1992 or can be obtained by calculation from the preparation composition of the compound having a hydroxy group in 1 g of the ink.
The hydroxy value in the present invention is determined from the preparation composition of the compound having a hydroxy group in 1 g of the ink among the above-described calculation methods. A specific calculation method is as in the following formula (a).

Hydroxy value [mgKOH/g] = A [mol] $\times$ (the number of hydroxy groups of the compound having a hydroxy group) $\times$ B [mg/mol] (a).

In the above formula (a), "A" represents the number of moles of the compound having a hydroxy group in 1 g of the ink. Furthermore, "B" represents the molecular weight of 1 mol of potassium hydroxide (56000 [mg/mol]).
When a plurality of types of compounds having a hydroxy group are contained in the ink, the hydroxy value is calculated for each compound having a hydroxy group by the above formula (a). The sum of the obtained hydroxyl values is defined as the hydroxyl value in 1 g of the ink.
The compound having a hydroxy group is not particularly limited as long as it is a compound having a hydroxy group in the structure thereof.
Examples of the hydroxyalkyl (meth)acrylate include 2-hydroxyethyl (meth)acrylate, 2-hydroxypropyl (meth) acrylate, and 4-hydroxybutyl (meth)acrylate.
Examples of the hydroxy (meth)acrylate having an alicyclic structure include 1,4-cyclohexane dimethanol mono(meth)acrylate.
Examples of the epoxy (meth)acrylate include an aliphatic alcohol-based epoxy (meth)acrylate, an aliphatic polyhydric alcohol-based epoxy (meth)acrylate, and a phenol-based epoxy (meth)acrylate. Examples of the epoxy (meth) acrylate include a polyhydric phenol-based epoxy (meth)acrylate, an alicyclic carboxylic acid-based epoxy acrylate, and an aromatic carboxylic acid-based epoxy (meth)acrylate.
As the epoxy (meth)acrylate, a commercially available product can be used. Examples of the commercially available products include DENACOL ACRYLATE DA-111, DA-141, DA-212, DA-250, DA-314, DA-721, DA-722, DA-911M, DA-920, and DA-931. These commercially available products are all manufactured by Nagase ChemteX Corporation.
These compounds having a hydroxy group may be used alone or in combination of two or more thereof.
In the ink of the present invention, the content of the polymerizable monomer is preferably in the range of 40 to 90% by mass and more preferably in the range of 60 to 85% by mass based on the total mass of the ink. When the content falls within the above range, coating film adhesion is improved.

<Blocked Isocyanate>

The blocked isocyanate is a compound in which an isocyanate group is blocked with a blocking agent in a compound having an isocyanate group. Hereinafter, the compound having an isocyanate group is also referred to as an "isocyanate compound".
The isocyanate group is activated by dissociating the blocking agent from the blocked isocyanate by heating.
In the ink of the present invention, the blocked isocyanate does not have reactivity since its isocyanate group is blocked until the ink is coated on a recording medium, and therefore, the ink has storage stability. After coating, when the ink is heated at a temperature equal to or higher than the temperature at which the blocking agent dissociates, an isocyanate group is generated. This reacts with a hydroxy group and/or a carboxy group of the monomer contained in the ink to form a coating film in which the ink is cured.

(Isocyanate Compound)

The isocyanate compound is preferably polyfunctional isocyanate from the viewpoint of curability.
The polyfunctional isocyanate is not particularly limited as long as it is a compound having two or more isocyanate groups in the molecule.
Specific examples of the polyfunctional isocyanate include aromatic polyisocyanates, such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, xylylene diisocyanate (XDI), tetramethylxylylene diisocyanate (TMXDI), tolidine diisocyanate (TODI), and 1,5-naphthalene diisocyanate (NDI); aliphatic polyisocyanates, such as hexamethylene diisocyanate (HDI), trimethylhexamethylene diisocyanate (TMHDI), lysine diisocyanate, and norbornane diisocyanate methyl (NBDI); alicyclic polyisocyanates, such as transcyclohexane-1,4-diisocyanate, isophorone diisocyanate (IPDI), H6XDI (hydrogenated XDI), H12MDI (hydrogenated MDI), H6TDI (hydrogenated TDI); polyisocyanates such as polymethylene polyphenylene polyisocyanate; and biuret products, isocyanurate products and carbodiimide-modified products thereof.
The ink of the present invention may use any of these isocyanates alone, or two or more of them in combination.

(Blocking Agent)

As the blocking agent, a known blocking agent can be used.
Examples of the blocking agent include alcohols such as ethanol, n-propanol, isopropanol, t-butanol, and isobutanol; phenols such as phenol, chlorophenol, cresol, xylenol, and p-nitrophenol; alkylphenols such as p-t-butylphenol, psec-butylphenol, p-sec-aminophenol, p-octylphenol, and p-nonylphenol; basic nitrogen-containing compounds such as 3-hydroxypyridine, 8-hydroxyquinoline, and 8-hydroxyquinaldine; active methylene compounds such as diethyl malonate, ethyl acetoacetate, and acetylacetone; acid amides such as acetamide, acrylamide, and acetanilide; acid imides such as succinimide and maleimide; imidazoles such as 2-ethylimidazole and 2-ethyl-4-methylimidazole; pyrazoles such as pyrazole, 3-methylpyrazole, and 3,5-dimethylpyrazole, lactams such as 2-pyrrolidone and ε-caprolactam; oximes of ketones or aldehydes such as acetoxime, methyl ethyl ketone oxime, cyclohexanone oxime, butanone oxime, and acetaldoxime, ethyleneimine; and bisulfites.
The blocking agent is preferably at least one compound selected from the group consisting of an oxime-based compound, a pyrazole-based compound, and an active ethylene-based compound from the viewpoint of ink storage stability and thermal dissociation properties.
Examples of the oxime-based compound include formamide oxime, acetaldoxime, acetoxime, methyl ethyl ketone oxime, cyclohexanone oxime, and butanone oxime (MEKO).
Examples of the pyrazole-based compound include pyrazole, 3-methylpyrazole and 3,5-dimethylpyrazole.
Examples of the active ethylene-based compound include dimethyl malonate, diethyl malonate (DEM), methyl acetoacetate, ethyl acetoacetate, and acetylacetone.
An example of the polyfunctional isocyanate compound having an isocyanate group protected by a blocking agent is 2-[(3,5-dimethylpyrazolyl)carbonylamino]ethyl methacrylate. Another example of the polyfunctional isocyanate compound having an isocyanate group protected by a blocking agent is 2-[(3-butylidene)aminooxycarbonylamino]ethyl methacrylate. Further example of the polyfunctional isocyanate compound having an isocyanate group protected with a blocking agent is 2-[(3,5-dimethylpyrazolyl)carbonylamino]ethyl acrylate. Yet further example of the polyfunctional isocyanate compound having an isocyanate group protected by a blocking agent is 2-[(3-butylidene)aminooxycarbonylamino]ethyl acrylate.
The blocked isocyanate preferably has an aromatic ring from the viewpoints of ink storage stability and coating film performance.
The blocked isocyanate having an aromatic ring is not particularly limited, and examples thereof include aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylenediisocyanate, xylylene diisocyanate (XDI), tetramethylxylylene diisocyanate (TMXDI), tolidine diisocyanate (TODI), and 1,5-naphthalene diisocyanate (NDI).
Furthermore, as a blocking agent for the blocked isocyanate, an aromatic group may be contained, and a blocking agent containing a benzene ring and a blocking agent containing a heteroaromatic ring are preferable. In particular, dimethylpyrazole (DMP) is preferably contained as a blocking agent for the blocked isocyanate containing an aromatic group.
The blocked isocyanate may have a polyisocyanate structure.
Examples of the polyisocyanate structure include three types: an isocyanurate type, a biuret type, and an adduct type. As the blocked isocyanate of the present invention, the isocyanurate type and the biuret type are preferable, and the isocyanurate type is particularly preferable from the viewpoint of curability and coating film performance.

The content of the blocked isocyanate is preferably in the range of 0.1 to 20 parts by mass, and more preferably in the range of 1 to 10 parts by mass, per 100 parts by mass of the polymerizable monomer.

When the amount of blocked isocyanate is 0.1 parts by mass or more, curing by heat becomes sufficient. When the amount of the blocked isocyanate is 20 parts by mass or less, the ink storage stability at high temperature is excellent.

As the blocking agent, one type may be used alone, two or more types may be used in combination, or multiple types of blocked isocyanates blocked with one or two or more types of blocking agents may be used.

Examples of product names of commercially available blocked isocyanates include BI7774, BI7779, BI7950, BI7960, BI7961, BI7981, BI7982, BI7991, BI7992 (all manufactured by LANXESS AG), MFK60X (manufactured by Asahi Kasei Chemicals Corporation), VPLS2253, BL4265SN (all manufactured by Sumika Bayer Urethane Co., Ltd), PU5211, PU5210 (all manufactured by Leeson Polyurethanes Ltd.), and Karenz MOI-BP (2-[(3,5-dimethylpyrazolyl)carbonylamino]ethyl methacrylate), Karenz MOI-BM (2-(0-[1'-methylpropylideneamino]carboxyamino)ethyl methacrylate) (all manufactured by Showa Denko K.K.).

<Photopolymerization Initiator>

When the polymerizable monomer (polyfunctional (meth)acrylate monomer) is a radically polymerizable compound, the photopolymerization initiator according to the present invention preferably uses a photoradical initiator. When the polymerizable monomer is a cationically polymerizable compound, the photopolymerization initiator according to the present invention preferably uses a photoacid generator.

The ink of the present invention may contain only one photopolymerization initiator or two or more photopolymerization initiators. The photopolymerization initiator may be a combination of both a photoradical initiator and a photoacid generator.

The photoradical initiator includes a cleavage-type radical initiator and a hydrogen abstraction-type radical initiator.

Examples of the cleavage-type radical initiator include acetophenone-based initiators, benzoin-based initiators, acylphosphine oxide-based initiators, and benzyl and methylphenyl glyoxyesters.

Examples of the acetophenone-based initiator include diethoxyacetophenone, 2-hydroxy-2-methyl-1-phenylpropan-1-one, benzyl dimethyl ketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl-phenylketone, 2-methyl-2-morpholino(4-thiomethylphenyl)propan-1-one, and 2-benzyl-2-dimethylamino-1-(4-morpholinophenyl)-butanone.

Examples of the benzoin-based initiator include benzoin, benzoin methyl ether, and benzoin isopropyl ether.

Examples of the acylphosphine oxide-based initiator include 2,4,6-trimethylbenzoin diphenylphosphine oxide.

Examples of the hydrogen abstraction-type radical initiator include a benzophenone-based initiator, a thioxanthone-based initiator, an aminobenzophenone-based initiator, and 10-butyl-2-chloroacridone. Examples of the hydrogen abstraction-type radical initiator also include 2-ethylanthraquinone, 9,10-phenanthrenequinone, and camphorquinone.

Examples of the benzophenone-based initiator include benzophenone, methyl o-benzoylbenzoate-4-phenylbenzophenone, 4,4'-dichlorobenzophenone, and hydroxybenzophenone. Examples of the benzophenone-based initiator also include 4-benzoyl-4'-methyl-diphenyl sulfide, acrylated benzophenone, 3,3',4,4'-tetra(t-butylperoxycarbonyl)benzophenone, and 3,3'-dimethyl-4-methoxybenzophenone.

Examples of the thioxanthone-based initiator include 2-isopropylthioxanthone, 2,4-dimethylthioxanthone, 2,4-diethylthioxanthone, and 2,4-dichlorothioxanthone.

Examples of the aminobenzophenone-based initiator include Michler's ketone and 4,4'-diethylaminobenzophenone.

Examples of the photoacid generator include the compounds described in "Organic Materials for Imaging", edited by The Japanese Research Association for Organic Electronics Materials, Bunshin Shuppan (1993), pp. 187-192.

The content of the photopolymerization initiator may be in the range in which the ink can be sufficiently cured, and can be, for example, in the range of 0.01 to 10% by mass based on the total mass of the ink of the present invention.

Examples of commercially available products of the photopolymerization initiator include Omnirad TPO (manufactured by Igm Resins B.V.), Omnirad 819 (manufactured by Igm Resins B.V.), and Omnirad 379 (manufactured by Igm Resins B.V.). Examples of commercially available products of the photopolymerization initiator also include Speedgure ITX (manufactured by Sartomer Company, Inc) and Speedcure EPD (manufactured by Sartomer Company, Inc).

<Polymerization Inhibitor>

The ink of the present invention preferably further contains a polymerization inhibitor. By containing the polymerization inhibitor, the adhesiveness between a plurality of compounds having curability can be reduced.

The "polymerization inhibitor" includes all compounds which are added to inhibit a polymerization reaction during

the preparation of an ink containing a polymerizable monomer or during storage after the preparation.

In the present invention, various conventionally known polymerization inhibitors can be used.

The polymerization inhibitor preferably contains any one of an N-oxyl-based polymerization inhibitor, a phenol-based polymerization inhibitor containing an o-t-butyl group, or a polymerization inhibitor having two or more aromatic rings.

Among these, it is more preferable to contain an N-oxyl-based polymerization inhibitor from the viewpoint of adhesion to a printed wiring board.

In the ink of the present invention, the content of the polymerization inhibitor is preferably in the range of 0.05 to 0.5% by mass based on the total mass of the ink.

(N-Oxyl-Based Polymerization Inhibitor)

Examples of the N-oxyl-based polymerization inhibitor include 4-hydroxy-2,2,6,6-tetramethylpiperidine-N-oxyl (TEMPO), 4-hydroxy-2,2,6,6-tetramethyl-piperidine-N-oxyl, 4-oxo-2,2,6,6-tetramethyl-piperidine-N-oxyl, 4-methoxy-2,2,6,6-tetramethyl-piperidin-N-oxyl, 4-acetoxy-2,2,6,6-tetramethyl-piperidine-N-oxyl, and Irgastab (registered trademark) UV10 (manufactured by Basf SE).

(Phenol-Based Polymerization Inhibitor)

Examples of the phenol-based polymerization inhibitor include 2,6-di-tert-butylphenol, 2,4-di-tert-butylphenol, and 2-tert-butyl 4,6-dimethylphenol. Examples of the phenol-based polymerization inhibitor also include 2,6-di-tert-butyl-4-methylphenol and 2,4,6-tri-tert-butylphenol. Examples of the phenol-based polymerization inhibitor also include 2,6-di-t-butyl-p-cresol (butylated hydroxytoluene: BHT), 4-methoxyphenol, and 2-methoxy-4-methylphenol.

(Quinone-Based Polymerization Inhibitor)

Examples of the quinone-based polymerization inhibitor include hydrochinone, methoxyhydroquinone, benzoquinone, 1,4-naphthoquinone, and p-tert-butylcatechol.

(Amine-Based Polymerization Inhibitor)

Examples of the amine-based polymerization inhibitor include alkylated diphenylamine, N,N'-diphenyl-p-phenylenediamine, and phenothiazine.

(Other Polymerization Inhibitor)

Examples of other polymerization inhibitors include copper dithiocarbamate-based polymerization inhibitors such as copper dimethyldithiocarbamate, copper diethyldithiocarbamate, and copper dibutyldithiocarbamate.

Only one of these may be contained, or two or more of these may be contained.

Among these, N-oxyl-based and quinone-based polymerization inhibitor are preferable. As the inhibitor, 4-hydroxy-2,2,6,6-tetramethylpiperidine-N-oxyl (TEMPO) is preferable. In addition, as the inhibitor, 2,6-di-t-butyl-p-cresol (butylated hydroxytoluene: BHT) and 2,4-di-tert-butylphenol are preferable. As the polymerization inhibitor having two or more aromatic rings, naphthoquinone and the like are preferable.

<Other Components>

(Surfactant)

The ink of the present invention may further contain a surfactant, if necessary.

Examples of the surfactant include an anionic surfactant, a nonionic surfactant, a cationic surfactant, and a silicone-based or fluorine-based surfactant.

Examples of the anionic surfactant include dialkylsulfosuccinates, alkylnaphthalenesulfonates, and fatty acid salts.

Examples of the nonionic surfactant include polyoxyethylene alkyl ethers, polyoxyethylene alkyl allyl ethers, acetylene glycols, and polyoxyethylene-polyoxypropylene block copolymers.

Examples of the cationic surfactant include alkylamine salts and quaternary ammonium salts.

(Coloring agent)

The ink of the present invention may further contain a coloring agent, if necessary.
The coloring agent may be a pigment or a dye and is preferably a pigment from the viewpoint of having good dispersibility in constituent components of the ink and excellent weather resistance.
The pigment is not particularly limited, and examples thereof include organic pigments or inorganic pigments of the following numbers listed in the Color Index.
The ink of the present invention may contain only one coloring agent, may contain two or more coloring agents, or may be adjusted to a desired color.
The content of the coloring agent is preferably in the range of 0.1 to 20% by mass, and more preferably in the range of 0.2 to 10% by mass based on the total mass of the ink.

(Pigment)

<<Red or Magenta pigment>>

Examples of red or magenta pigments include pigments selected from Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36, or mixtures thereof.

<<Blue or Cyan Pigment>>

Examples of blue or cyan pigments include pigments selected from Pigment Blue 1, 15, 15:1, 15:2, 15:3, 15:4, 15:6, 16, 17:1, 22, 27, 28, 29, 36, 60, or mixtures thereof.

<<Green Pigment>>

Examples of green pigments include pigments selected from Pigment Green 7, 26, 36, 50, or mixtures thereof.

<<Yellow Pigment>>

Examples of yellow pigments include pigments selected from Pigment Yellow 1, 3, 12, 13, 14, 17, 34, 35, 37, 55, 74, 81, 83, 93, 94, 95, 97, 108, 109, 110, 137, 138, 139, 147, 153, 154, 155, 157, 166, 167, 168, 180, 185, 193, or mixtures thereof.

<<Black Pigment>>

Examples of black pigments include pigments selected from Pigment Black 7, 28, 26, or mixtures thereof.

<<Examples of Commercially Available Pigment>>

Examples of commercially available pigments include Black Pigment (manufactured by Mikuni Color Ltd.), Chromofine Yellow 2080, 5900, 5930, AF-1300, 2700 L, Chromofine Orange 3700 L, 6730, Chromofine Scarlet 6750, Chromofine Magenta 6880, 6886, 6891N, 6790, 6887, Chromofine Violet RE, Chromofine Red 6820, 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, 5000P, Chromofine Green 2GN, 2GO, 2G-550D, 5310, 5370, 6830, Chromofine Black A-1103, Seikafast Yellow 10GH, A-3, 2035, 2054, 2200, 2270, 2300, 2400(B), 2500, 2600, ZAY-260, 2700(B), 2770, Seikafast Red 8040, C405(F), CA120, LR-116, 1531B, 8060R, 1547, ZAW-262, 1537B, GY, 4R-4016, 3820, 3891, ZA-215, Seikafast Carmine 6B1476T-7, 1483LT, 3840, 3870, Seikafast Bordeaux 10B-430, Seikalight Rose R40, Seikalight Violet B800, 7805, Seikafast Maroon 460N, Seikafast Orange 900, 2900, Seikalight Blue C718, A612, Cyanine Blue 4933M, 4933GN-EP, 4940, 4973 (all manufactured by Dainichiseika Color & Chemicals Mfg. Co., Ltd.; note that "Chromofine" is a registered trademark owned by the same company); KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103, 104, 105, 106, 111, 118, 124, KET Green 201 (all manufactured by DIC Corporation); Colortex Yellow 301, 314, 315, 316, P-624, 314, U10GN, U3GN, UNN, UA-414, U263, Finecol Yellow T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818,

P-908, 510, Colortex Green 402, 403, Colortex Black 702, U905 (all manufactured by Sanyo Color Works, Ltd.; note that "Colortex" and "Finecol" are registered trademarks of the same company); Lionol Yellow 1405G, Lionol Blue FG7330, FG7350, FG7400G, FG7405G, ES, ESP-S (all manufactured by Toyo Ink Co., Ltd.; note that "Lionol" is a registered trademark of the same company); Toner Magenta E02, Permanent Rubin F6B, Toner Yellow HG, Permanent Yellow GG-02, Hostapeam Blue B2G (all manufactured by Hoechst Industries, Ltd); Novoperm P-HG, Hostaperm Pink E, hostaperm Blue B2G (all manufactured by Clariant AG; note that "Novoperm" and "Hostaperm" are registered trademarks of the same company); Carbon Black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, CF9 (all manufactured by Mitsubishi Chemical Corporation).

<<Dispersion of Pigment>>

The pigment can be dispersed using, for example, a ball mill, a sand mill, an attritor, a roll mill, an agitator, a Henschel mixer, a colloid mill, an ultrasonic homogenizer, a pearl mill, a wet-type jet mill, a paint shaker, or the like.
The dispersion of the pigment is preferably performed such that the volume average particle size of the pigment particles is preferably in the range of 0.08 to 0.5 μm. Furthermore, the dispersion of the pigment is preferably performed such that the maximum particle size of the pigment particles is preferably in the range of 0.3 to 10 μm, and more preferably 0.3 to 3 μm.
The dispersion of the pigment is adjusted by selection of the pigment, the dispersant, and the dispersion medium, dispersion conditions, filtration conditions, and the like.

<<Dispersant>>

The ink of the present invention may further contain a dispersant in order to enhance the dispersibility of the pigment.
Examples of the dispersant include carboxylate esters having a hydroxy group, salts of long-chain polyaminoamides and high molecular weight-acid esters, salts of high molecular weight polycarboxylic acids, salts of long-chain polyaminoamides and polar acid esters, high molecular weight unsaturated acid esters, high molecular copolymers, modified polyurethanes, modified polyacrylates, polyetherester-type anionic surfactants, naphthalenesulfonic acid formalin condensate salts, aromatic sulfonic acid formalin condensate salts, polyoxyethylene alkyl phosphate esters, polyoxyethylene nonylphenyl ether, and stearylamine acetate. Examples of commercially available products of the dispersant include Solsperse (registered trademark) series manufactured by Avecia Limited, and PB series manufactured by Ajinomoto Fine-Techno Co., Inc.

<<Dispersion Aid>>

The ink of the present invention may further contain a dispersion aid, if necessary.
The dispersion aid may be selected according to the pigment.
The total content of the dispersant and the dispersion aid is preferably in the range of 1 to 50% by mass based on the total mass of the pigment.

<<Dispersion Medium>>

The ink of the present invention may further contain a dispersion medium for dispersing the pigment, if necessary.
Although the ink of the present invention may contain a solvent as a dispersion medium, the above-described monomer is preferably used as the dispersion medium in order to suppress the solvent from remaining in the formed image. Examples of the above-described monomer include monomers having a particularly low viscosity.
In addition, when a solvent is used as the dispersion medium, in a case where the ink is heated from the viewpoint of ejection stability, the solvent is easily volatilized, and the dispersibility of the pigment is easily deteriorated. However, by using the above-described polyfunctional (meth)acrylate monomer, a decrease in the dispersibility of the pigment can be suppressed.

(Other Additives)

The ink of the present invention may further contain a coupling agent, a solvent, and the like, if necessary.

<<Coupling Agent>>

The ink of the present invention may further contain various coupling agents, if necessary. The inclusion of the coupling agent can improve adhesion to a printed wiring board.
Examples of the various coupling agents include silane-based, titanium-based, and aluminum-based coupling agents.

<<Curing Accelerator>>

In the present invention, a curing accelerator may be contained, if necessary.
Any curing accelerator can be used without particular limitation as long as it accelerates the thermal curing of the resin component.
Examples of the curing accelerator include imidazoles, dicyandiamide derivatives, dicarboxylic acid dihydrazide, triphenylphosphine, and tetraphenylphosphonium tetraphenylborate. Examples of the curing accelerator also include 2-ethyl-4-methylimidazole-tetraphenyl borate and 1,8-diazabicyclo[5.4.0]undecene-7-tetraphenyl borate.

<<Ion Scavenger>>

In the present invention, an ion scavenger may be included, if necessary.
When an ion scavenger is included, there are advantages that ionic impurities are adsorbed, and the insulating properties under conditions in which the cured film has absorbed moisture are improved, and the like.
Examples of the ion scavenger include inorganic ion adsorbents such as triazine thiol compounds, bisphenol-based reducing agents, zirconium compounds, and antimony bismuth-based magnesium aluminum compounds.

<<Flame Retardant>>

In the present invention, a flame retardant may be contained, if necessary.
As the flame retardant, hydrated metal-based flame retardants such as aluminum hydroxide and magnesium hydroxide, red phosphorus, ammonium phosphate, ammonium carbonate, zinc borate, zinc stannate, molybdenum compound-based flame retardants, bromine compound-based flame retardants, and chlorine compound-based flame retardants can be used. In addition, as the flame retardant, a phosphate ester, a phosphorus-containing polyol, a phosphorus-containing amine, melamine cyanurate, a melamine compound, a triazine compound, a guanidine compound, a silicon polymer, or the like can be used.

<<Solvent>>

The ink of the present invention is preferably solvent-free from the viewpoints of rapid curability and ejection stability, but it may be added for adjustment of the ink viscosity.

5. Method for Producing Inkjet Ink

The ink of the present invention can be prepared by mixing the above-described polymerizable monomer, the blocked isocyanate, the photopolymerization initiator, and any other components. In addition, it is preferable to filter the obtained mixed liquid with a predetermined filter. Note that in a case of preparing ink containing a pigment, it is preferable to prepare a pigment dispersion liquid containing the pigment and a polymerizable monomer and then mix the pigment dispersion liquid with other components. The pigment dispersion liquid may further contain a dispersant.
The pigment dispersion liquid can be prepared by dispersing a pigment in a polymerizable compound.
The pigment can be dispersed using, for example, a ball mill, a sand mill, an attritor, a roll mill, an agitator, a Henschel mixer, a colloid mill, an ultrasonic homogenizer, a pearl mill, a wet jet mill, a paint shaker, or the like. At this time, a dispersant may be added.

6. Method for Storing Inkjet Ink

In the method for storing ink according to the present invention, the ink is preferably stored at a temperature in the range of -15 to 40°C and a humidity of 60% RH or less.
Specifically, in order to store the ink within the above-described temperature and humidity ranges, the following ink storage body is preferably used as the storage container for storing the ink according to the present invention.

[Ink Storage Container]

The ink according to the present invention is preferably stored in an ink storage container having a water vapor transmittance in the range of 0.05 to 1.50 $g/m^2 \cdot day/atm$ under conditions of 40°C and 90% RH. Hereinafter, the ink storage container is also simply referred to as a "storage container".
The storage container is a member that is filled with ink and substantially holds the ink.
An aspect of the storage container in the present invention includes, but is not limited thereto, an ink cartridge, a pack, a bottle, a tank, a jar, and a can. Among these, an ink cartridge, a pack, a bottle, and a tank are preferable, and a pack is more preferable, because they are generally used and the water vapor transmittance can be easily controlled to a desired value. In addition, the ink of the present invention may be contained in a bottle and then further contained in a pack.
The pack is a container using a flexible film. The pack is preferable in that the pack is light in weight and is easily put in a box-shaped container, the volume of the container is easily changed according to the remaining amount of the ink, and the film can be processed into a bag shape by thermal fusion (heat sealing) and used.
Note that modes of use of the storage container of the present embodiment include at least the following forms (A) to (C):

(A) a form of an ink cartridge or the like which is separate from an inkjet recording apparatus (coating film apparatus) and is mounted on the recording apparatus to sequentially supply the composition to the recording apparatus;
(B) a form of a separate body from the recording apparatus and in which only the ink is transferred from the storage container to the recording apparatus when the ink is used; and
(C) a form of a tank or the like which is provided in the recording apparatus in advance and in which ink is contained.

The above-described (A) and (B) can be said to be ink storage containers from the shipment of the storage container to immediately before supplying (transferring) the ink to the recording apparatus.
The above (C) can be said to be an ink storage container from the shipment of the recording apparatus to the start of the first use of the ink in the recording apparatus.
Note that the above-described (A) and (C) can be said to be storage containers for ink that performs printing with the recording apparatus in a state where the ink is supplied from the container to the recording apparatus via a connector such as an ink tube.
In addition, the above-described (B) can be said to be a storage container for ink that performs printing with the recording apparatus after the ink is transferred from the storage container to the recording apparatus. Examples of the target to which the ink is transferred in (B) include a tank provided in the recording apparatus.
Examples of the constituent material of the storage container include polyethylene terephthalate (PET), polypropylene (PP), polyethylene, ethylene-vinyl acetate copolymer, ethylene-vinyl alcohol copolymer (EVOH), and polystyrene. In addition, the storage container may be a film of any of these materials.
Further, the storage container may be formed by mixing the above materials at an appropriate ratio or by stacking a plurality of the above materials. In the case of a film, the storage container may be obtained by lamination. When a plurality of films is stacked, all of the plurality of films does not need to be the above-described films, and a part of the films may be films including other materials, for example, a metal or a metal compound.
Furthermore, from the viewpoint of increasing the flexibility of the storage container, a plasticizer may be contained as a constituent material of the storage container.
Examples of the plasticizer include fatty acid esters, epoxy compounds, and polyester compounds. Among these, fatty acid esters are preferable from the viewpoint of versatility as a plasticizer. Examples of the fatty acid ester include a phthalate ester, an adipate ester, a trimellitate ester, and a citrate ester. The fatty acid esters may be used alone or in combination of two or more.
The storage container may be stirred during storage and transportation in order to release sedimentation of components contained in the ink. This is because, after sedimentation of components contained in the ink occurs and time passes for a long time, the sediment may turn into cakes, which may be difficult to be removed. In addition, when the ink is supplied from the storage container to the recording apparatus, it is preferable to release the sedimentation by stirring the storage container.
In a case where the storage container is a container (pack) using a flexible film, durability is required to prevent a crack or a tear from occurring particularly during the stirring operation.
Preferred examples of the film material having good durability include plastic films such as polyethylene terephthalate (PET), polypropylene, polyethylene, ethylene-vinyl acetate copolymer, ethylene-vinyl alcohol copolymer, and polystyrene. The film material is more preferably an ethylene-vinyl acetate copolymer.
Preferred examples of the film include stretched plastic films such as high-density, low-density, or linear low-density polyethylene, polypropylene, ethylene-vinyl alcohol copolymer, and polystyrene. A laminated film in which a plurality of films is bonded may be used.

In a case where the storage container is the above-described pack, when a component contained in the ink settles or the like, the pack may be shaken from side to side to stir the ink and cause the ink to recover from settling. In that case, a plasticizer can be contained as a constituent material of the pack from the viewpoint of preventing the pack from being cracked or broken. The plasticizer may be any of those described above and is preferably a fatty acid ester.

When the storage container is the pack described above, the water vapor transmittance of the film forming the pack is preferably within the range of 0.05 to 1.50 g/m$^2$·day/atm under conditions of 40°C and 90% RH. Furthermore, the water vapor transmittance is more preferably within the range of 0.05 to 1.00 g/m$^2$·day·atm, and particularly preferably within the range of 0.05 to 0.5 g/m$^2$·day·atm.

Using a film having a water vapor transmittance within the range of 0.05 to 1.50 g/m$^2$·day·atm can suppress an increase in the moisture content in the ink filled in the pack even when the pack is stored for a long period of time.

The water vapor transmittance can be set to 1.50 g/m$^2$·day·atm or less by, for example, selecting the material constituting the film, or providing a layer formed of at least one of a metal and a metal compound on the film.

Of these, from the viewpoint of high versatility, it is preferable to provide a layer formed of at least one of a metal and a metal compound.

Examples of the metal include Al and Ti. The metal compound is preferably a metal oxide, and examples thereof include alumina, silica, titania, and zirconia. These are used singly or in combination of two or more. Note that, in the present specification, the metal oxide encompasses silica.

The thickness of the film forming the pack is preferably within the range of 50 to 200 μm. The lower limit of the film thickness is more preferably 70 μm or more, and still more preferably 80 μm or more. The upper limit of the film is preferably 150 μm or less, and more preferably 130 μm or less. The film thickness is the total thickness when the film is a laminated film consisting of a plurality of layers. When the film thickness is within the above range, it is preferable in terms of durability and flexibility of the film.

A capacity of ink that the storage container can store is not limited to the following but is preferably in the range of 100 to 5000 mL. The lower limit of the capacity of the ink is preferably 200 mL or more, and more preferably 500 mL or more. The upper limit of the capacity of the ink is preferably 3000 mL or less, more preferably 2000 mL or less, and still more preferably 1000 mL or less. When the capacity falls within the above range, all of the curability, the storage stability, and the ejection stability can be made more excellent.

## 5. Solder Resist and Printed Wiring Board

As the solder resist, the above-described ink according to the present invention is preferably used.

As a method for forming a solder resist pattern, first, patterning is performed on an oxide film having conductivity, such as copper and zinc, formed on a substrate with the ink according to the present invention by inkjet printing.

Next, the ink is cured by light to form a resist film.

Then, a portion of the oxide film which is not covered with the resist film is removed by an etching solution using an acid.

Furthermore, a fine circuit or pattern can be formed by removing the resist film covering the oxide film with an alkali.

In this way, a printed wiring board having a solder resist is formed.

## Examples

Hereinafter, the present invention will be specifically described with reference to Examples, but the present invention is not limited thereto. Note that, in the following Examples, operations were performed at room temperature (25°C) unless otherwise specified. Further, unless otherwise specified, "%" and "parts" mean "% by mass" and "parts by mass", respectively.

### <Preparation of Yellow Pigment Dispersion (Y Dispersion)>

The following dispersant 1 and dispersant 2, and a dispersion medium were placed in a stainless steel beaker, heated, stirred, and dissolved for 1 hour while heating on a hot plate at 65°C, and cooled to room temperature. Thereafter, the following pigments were added thereto, and the mixture was placed in a glass bottle together with 200 g of zirconia beads having a diameter of 0. 5 mm, and the glass bottle was hermetically sealed. This was subjected to a dispersion treatment with a paint shaker until a desired particle diameter was obtained, and then the zirconia beads were removed.

| | |
|---|---|
| Dispersant 1: EFKA7701 (manufactured by Basf SE) | 5.6 parts by mass |
| Dispersant 2: Solsperse 22000 (manufactured by The Lubrizol Corporation) | 0.4 parts by mass |

(continued)

| | |
|---|---|
| Dispersion medium: dipropylene glycol diacrylate (containing 0.2% UV-10) | 80.6 parts by mass |
| Pigment: PY147 (pigment yellow 147) (Oracet (R) Yellow 140 manufactured by Basf SE) | 13.4 parts by mass |

<Preparation of Cyan Pigment Dispersion (C Dispersion)>

The yellow pigment dispersion was prepared in the same manner as in the preparation of the pigment dispersion except that the dispersant, the dispersion medium, and the pigment were changed as described below.

| | |
|---|---|
| Dispersant: EFKA7701 (manufactured by Basf SE) | 7 parts by mass |
| Dispersion medium: dipropylene glycol diacrylate (containing 0.2% UV-10) | 70 parts by mass |
| Pigment: PB15:4 (pigment blue 15:4) (manufactured by Dainichiseika Color & Chemicals Mfg. Co., Ltd., Chromofine Blue 6332JC) | 23 parts by mass |

<Blocked Isocyanate>

As the blocked isocyanate, the following were used.

· Trixene BI7982 (manufactured by LANXESS AG, isocyanate compound: HDI

Trimer, blocking agent: DMP, 3 functional BI)

"HDI Trimer" is $C_{24}H_{36}N_6O_6$ and has an isocyanurate structure.

"DMP" is dimethylpyrazole and has an aromatic ring structure.

<Photopolymerizable Monomer>

As the photopolymerizable monomer, those shown in Table I below were used.

[Table 1]

Table I

| | | Product name | Company name | Name and the like |
|---|---|---|---|---|
| Polymerizable monomer | (Meth)acrylate | HDDA | Osaka Organic Chemical Industry | 1,6-hexanediol diacrylate |
| | | DPGDA | Daicel-allnex Ltd. | dipropylene glycol diacrylate |
| | | 4HBA | Osaka Organic Chemical Industry | 4-hydroxybutyl acrylate, weight-average molecular weight Mw: 144 |
| | | TMP-3 | DKS Co., Ltd. | EO-modified trimethylolpropane triacrylate |
| | Acrylate containing bisphenol A structure | EBECRYL 150 | Daicel-allnex Ltd. | EO-modified bisphenol A diacrylate |

<Photopolymerization Initiator>

The following were used as the photopolymerization initiator.

· Omnirad 379EG (manufactured by Igm Resins B.V.)

· Omnirad TPO H (manufactured by Igm Resins B.V.)

· Speedcure 2-ITX (manufactured by Sartomer Company, Inc., 2-isopropylthioxanthone)

<Preparation of Inkjet Inks>

The components were mixed in accordance with the ink composition listed in Table II below, and the mixed liquid was filtered through a Teflon (registered trademark) 3-μm membrane filter produced by ADVANTEC while the mixed liquid was heated to 60°C, to obtain each of inks 1 to 7. The inks 1 to 7 had the same composition, and the inks 1 to 7 having different water content rates were prepared by performing a dehydration step (adjustment of the injection time of dry gas) described below after the preparation of the inks.

[Table 2]

Table II

| Ink No. | | 1 | 2 | 3 | 4 | 5 | 6 | 7 |
|---|---|---|---|---|---|---|---|---|
| Blocked isocyanate [parts by mass] | BI7982 | 18.00 | 18.00 | 18.00 | 18.00 | 18.00 | 18.00 | 18.00 |
| (Meth)acrylate [parts by mass] | 1.6-hexanediol diacrylate | 18.00 | 18.00 | 18.00 | 18.00 | 18.00 | 18.00 | 18.00 |
| | dipropylene glycol diacrylate | 27.70 | 27.70 | 27.70 | 27.70 | 27.70 | 27.70 | 27.70 |
| | 4-hydroxybutyl acrylate | 2.00 | 2.00 | 2.00 | 2.00 | 2.00 | 2.00 | 2.00 |
| | EO-modified trimethylolpropane triacrylate | 5.00 | 5.00 | 5.00 | 5.00 | 5.00 | 5.00 | 5.00 |
| Acrylate containing bisphenol A structure [parts by mass] | EBECRYL 150 | 20.00 | 20.00 | 20.00 | 20.00 | 20.00 | 20.00 | 20.00 |
| Photopolymerizati on initiator [parts by mass] | Omnirad 379 | 3.60 | 3.60 | 3.60 | 3.60 | 3.60 | 3.60 | 3.60 |
| | TPO | 4.80 | 4.80 | 4.80 | 4.80 | 4.80 | 4.80 | 4.80 |
| | ITX | 0.30 | 0.30 | 0.30 | 0.30 | 0.30 | 0.30 | 0.30 |
| Pigment [parts by mass] | pigment blue 15:4 | 0.20 | 0.20 | 0.20 | 0.20 | 0.20 | 0.20 | 0.20 |
| | pigment yellow 147 | 0.40 | 0.40 | 0.40 | 0.40 | 0.40 | 0.40 | 0.40 |
| Water content rate of ink [%] | | 0.08 | 0.19 | 0.44 | 0.58 | 0.71 | 0.32 | 0.68 |

<Inkjet Pattern Formation>

The ink prepared above was loaded into an inkjet recording apparatus having an inkjet recording head with a piezo-type inkjet nozzle.

As illustrated in FIG. 1, the ink supply system of the apparatus includes a dehydrator, an ink tank (first sub-tank), a degasser, an ink channel, a sub ink tank (second sub-tank) provided immediately before the inkjet recording head, a pipe with a metal filter, a piezo head, and the like.

Dehydration and degassing were performed with the dehydrator and the degasser under the following conditions, and the ink from the ink tank to the head portion was heated to 55°C.

Then, a heater was built in the piezo head, and the ink in the piezo head was heated to 60°C. As the piezo head, KM1800i-SHC manufactured by Konica Minolta, Inc. was used.

Using this inkjet recording apparatus, a voltage was applied to form dots in the droplet amount of 3.5 pl.

A 70 mm × 70 mm solid pattern and a comb-shaped pattern having lines and spaces of 100 μm were printed on the substrate so that each had a thickness of 30 μm. The ink layer was irradiated with an LED lamp (365 nm) manufactured by Phoseon Technology, Inc. so as to be 200 mJ/$cm^2$ for each pass and was temporarily cured. Thereafter, it was placed in an oven set at 150°C for 60 minutes for full curing and further irradiated with 2000 mJ/$cm^2$ by a mercury vapor lamp to obtain a printed sample.

<Ink Dehydration Step>

Dry gas was generated using a membrane-type dehumidifier and a general-purpose compressor. As the dehumidifier, an SMC membrane-type dehumidifier IDG5-02B-PS was used. The relative humidity of the generated dry gas was measured to be 1.5% RH.

Dry gas was injected into the ink in the dehydrator of the ink supply system. The flow rate of the dry gas was set to be in the range of 0.3 to 1. 0 ml/min, in which the generation and defoaming of air bubbles at the ink interface were balanced. The water content rate of each ink was adjusted by changing the injection time of the dry gas from 1 to 12 hours.

After the dehydration step, the water content rate of the ink before the ink flowed into the head was measured. The water content rate was measured using a Karl Fischer moisture meter (MKV-710, manufactured by Kyoto Electronics Manufacturing Co., Ltd). The measured water content rate of the ink is as illustrated in Table II.

<Ink Degassing Step>

As the degasser, an external perfusion-type hollow fiber degassing module and a vacuum pump were used.

After the dehydration step, the ink flowing from the ink tank was allowed to flow to the outside of the hollow fibers from the ink inlet of the degassing module. Degassing was performed in a state where the inside of the hollow fibers was depressurized by setting the degree of vacuum of the vacuum pump to - 90 kPa, to adjust the amount of dissolved oxygen in the ink.

As the external perfusion-type hollow fiber degassing module, for example, SEPAREL EF-002A-P manufactured by Dainippon Ink and Chemicals, Inc. was used.

After the degassing step, the amount of dissolved oxygen in the ink before the ink flowed into the head was measured. The amount of dissolved oxygen was measured using a fluorescent dissolved oxygen meter (VisiFerm DO Arc, manufactured by Hamilton Company).

<Amount of Solid Matter Generated>

The dehydration step and the degassing step were performed, and the ink before flowing into the head was stored at 40°C and 80% RH for 4 days. Thereafter, the ink was stored at an ejection temperature of 55°C for 1 day, and then 300 mL of the ink was subjected to pressure filtration using a 5.0 μm PTFE filter (diameter of 2.0 mm). Thereafter, the 5.0 μm PTFE filter was taken out and washed with ethanol, then, the presence or absence of solid matter was checked with an optical microscope and evaluated according to the following criteria. Grades "A" and "B" in the following criteria were determined to have no practical problem.

(Criteria)

A: No solid matter is present on the entire surface of the filter.
B: Solid matter is present at 1% or less of the filter area.
C: The solid matter is present at more than 1% and 5% or less of the filter area.
D: Solid matter is present at more than 5% of the filter area.

<Ink Ejection Stability (Large Volume Ejection)>

(The number of deficient nozzles after ejecting 200 kg of ink)

The piezo head was used to perform continuous ejection (driving) under the conditions of a droplet amount of 3.5 pL, a droplet speed of 7.0 m/sec, an ejection frequency of 20 kHz, and a coverage rate of 100%. After ejecting 200 kg of the ink, the number of nozzles that were not ejecting was counted and evaluated according to the following criteria. Grades "A", "B", and "C" according to the following criteria were determined to have no practical problem.

(Criteria)

A: The number of deficient nozzles is zero.
B: The number of deficient nozzles is one or more and less than three.
C: The number of deficient nozzles is three or more and less than five.
D: The number of deficient nozzles is five or more and less than 10.
E: The number of deficient nozzles is 10 or more.

<Ink Curability 1 (Cross-cut Resistance, Adhesion to Substrate)>

For the printed samples of the solid pattern, cuts were made in the cured film in a grid pattern in accordance with the cross-cut method of JIS K5600, and an adhesive tape was attached and peeled off to observe the peeling state of the cured film. Grades "A" and "B" in the following criteria were determined to have no practical problem.

(Criteria)

A: Adhesion residual rate is 100%.
B: Adhesion residual rate is 80% or more and less than 100%.
C: Adhesion residual rate is 60% or more and less than 80%.
D: Adhesion residual rate is less than 60%.

<Ink Curability 2 (Resistance to Hydrochloric Acid)>

For the printed samples of the solid pattern, the cured film is immersed in 10% hydrochloric acid for 30 minutes, then washed with water, and dried. Thereafter, the cured film was cut in a grid pattern in accordance with the cross-cut method of JIS K5600, and an adhesive tape was attached and peeled off to observe the peeling state of the cured film. Grades "A" and "B" in the following criteria were determined to have no practical problem.

(Criteria)

A: Adhesion residual rate is 100%.
B: Adhesion residual rate is 80% or more and less than 100%.
C: Adhesion residual rate is 60% or more and less than 80%.
D: Adhesion residual rate is less than 60%.

[Table 3]

Table III

| Ink No. | | 1 | 2 | 3 | 4 | 5 | 6 | 7 |
|---|---|---|---|---|---|---|---|---|
| Water content rate of ink [%] | | 0.08 | 0.19 | 0.44 | 0.58 | 0.71 | 0.32 | 0.68 |
| Amount of dissolved oxygen in ink [mg/lppm] | | 0.20 | 2.10 | 3.30 | 4.80 | 3.70 | 5.50 | 5.40 |
| Amount of solid matter generated | Filtration with filter after storage | A | A | A | A | C | C | D |
| Ejection stability | Number of nozzles that do not eject after large-volume ejection (200 kg) | A | A | A | B | D | E | E |
| Curability | Cross-cut resistance | A | A | A | B | B | C | C |
| | Resistance to hydrochloric acid | A | A | A | A | B | C | D |
| Remarks | | Present invention | Present invention | Present invention | Present invention | Comparative example | Comparative example | Comparative example |

As illustrated in the above results, it is found that the coating film forming method of the present invention prevents the generation of solid matter, is excellent in ejection stability after large volume ejection, and has good curability, as compared with the coating film forming methods of Comparative Examples.

Industrial Applicability

The present invention can be used for a coating film forming method in which generation of solid matter in an apparatus and the clogging of a head nozzle are suppressed, and satisfactory ejection properties and stable curability are obtained.

Reference Signs List

1 inkjet recording apparatus (coating film forming apparatus)
24a recording head
24b ink channel
50 ink feeder
51 ink tank
53 feed pump
241 first sub-tank
241a first float sensor
242 degassing module
243 liquid feed pump
244 check valve
245 second sub-tank
245a second float sensor
249 vacuum pump
270 ink heater (heating device according to the present invention)
280 degasser
300 dehydrator (dehydration device according to the present invention)
2421 outer shell (chamber)
2424 central tube
2424b fine hole (hole portion)
2426 hollow fiber membrane (gas permeable membrane)
2427 heater (heating device according to the present invention)
2428 second heater (heating device according to the present invention)

## Claims

**1.** A coating film forming method using an inkjet head, wherein

an inkjet ink contains

a polymerizable monomer,
a blocked isocyanate, and
a photopolymerization initiator,

the method comprising the steps of:

dehydrating the inkjet ink; and
heating the inkjet ink such that a temperature of the inkjet ink to be ejected from the inkjet head becomes 40°C or higher.

**2.** The coating film forming method according to claim 1, wherein
the heating step includes heating the inkjet ink in an ink supply path for supplying the inkjet ink to the inkjet head.

3. The coating film forming method according to claim 1, wherein the dehydration step includes injecting a dry gas having a moisture content reduced by a dryer into an ink supply path for supplying the inkjet ink to the inkjet head.

4. The coating film forming method according to claim 3, wherein the dehydration step includes making the dry gas by using a membrane filter or activated carbon.

5. The coating film forming method according to claim 1, further comprising a step of degassing the inkjet ink after the dehydration step.

6. The coating film forming method according to claim 5, wherein the degassing step includes using a hollow fiber or an ultrasonic wave.

7. The coating film forming method according to claim 2, further comprising, after the dehydration step, a step of second heating in the ink supply path for supplying the inkjet ink to the inkjet head, in addition to the heating step.

FIG.1

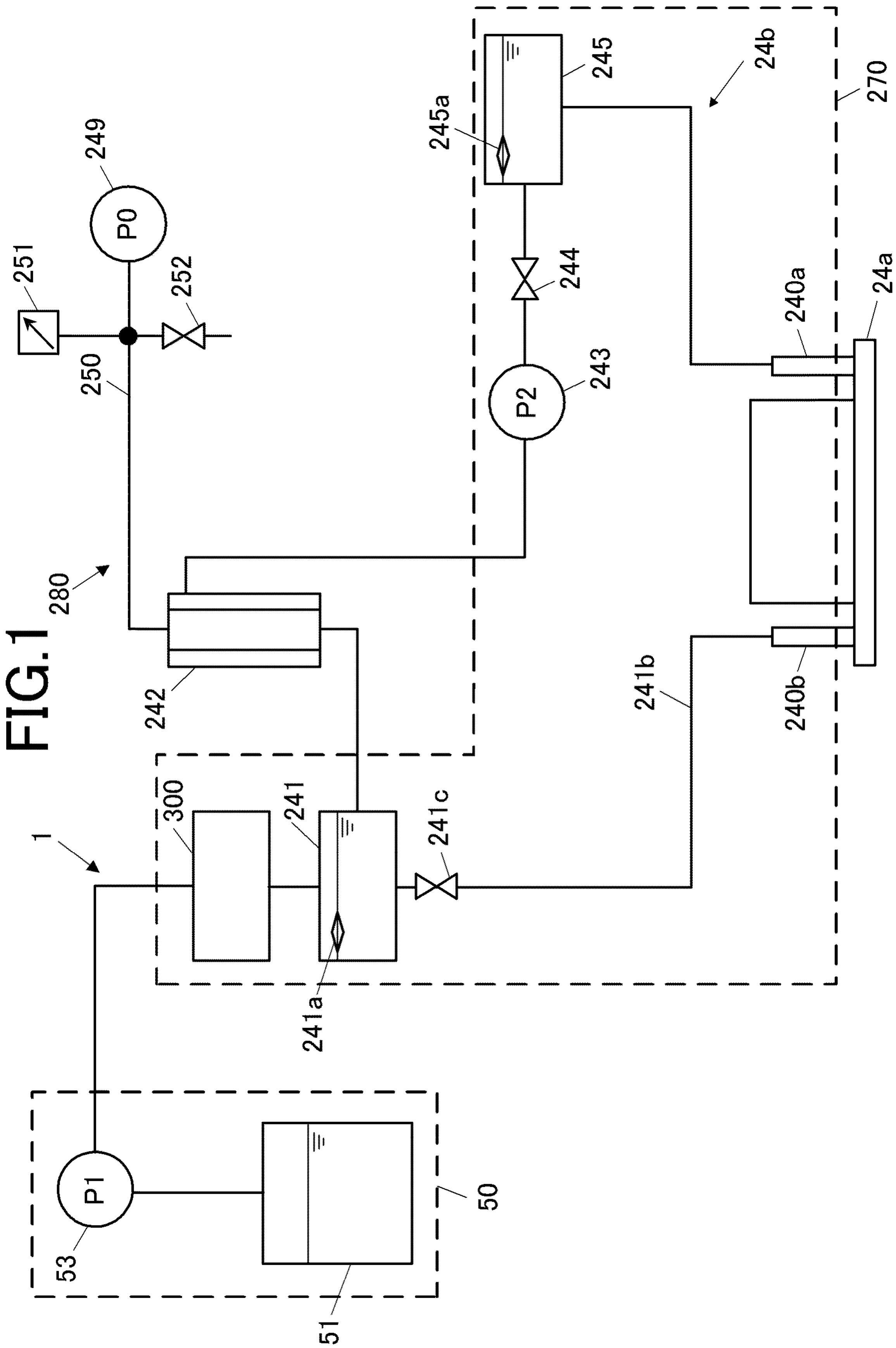

1
280
249
P0
251
252
250
242
300
241
241a
241c
241b
243
P2
244
245
245a
24b
270
240a
24a
240b
P1
53
51
50

FIG.2

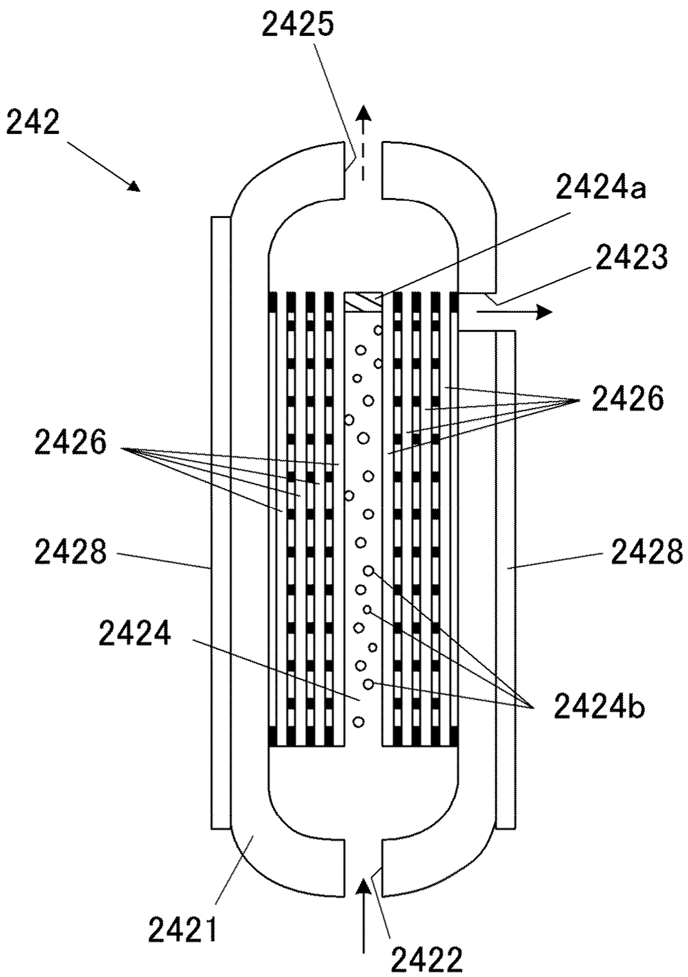

FIG.3A

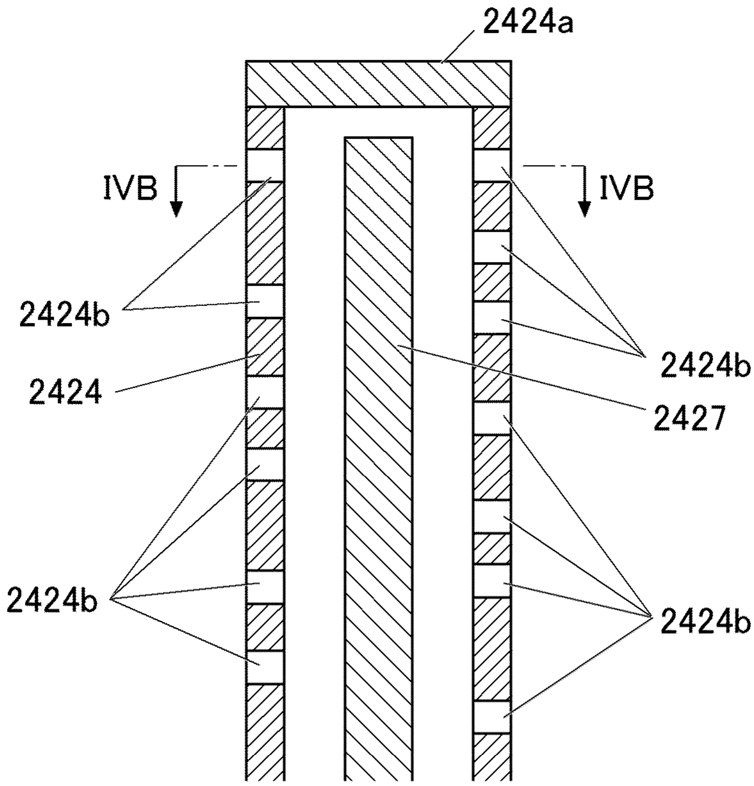
2424a
IVB
IVB
2424b
2424
2424b
2427
2424b
2424b

FIG.3B

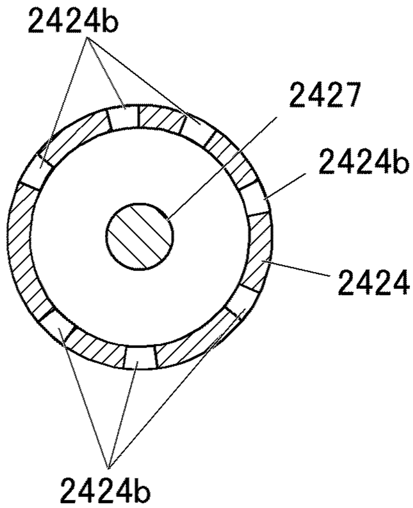
2424b
2427
2424b
2424
2424b

FIG.4

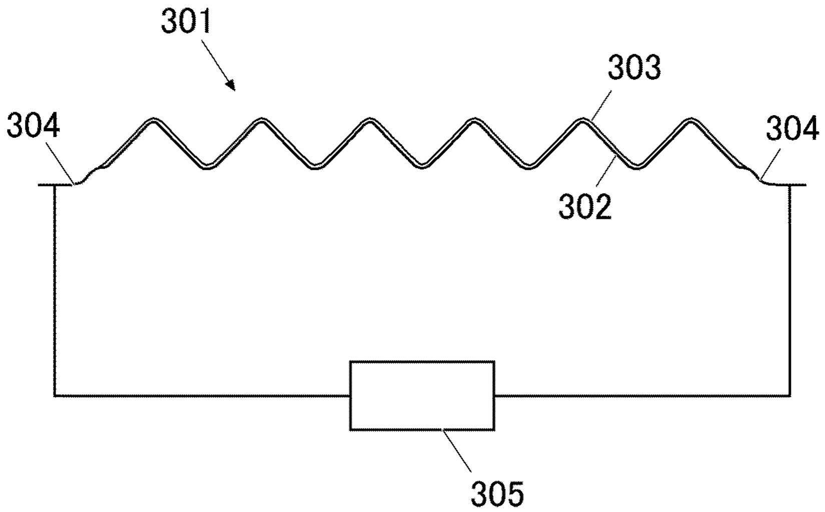

**INTERNATIONAL SEARCH REPORT**

International application No.
**PCT/JP2024/020616**

**A. CLASSIFICATION OF SUBJECT MATTER**

***B41M 5/00***(2006.01)i; ***B41J 2/17***(2006.01)i; ***B41J 2/19***(2006.01)i; ***C09D 11/30***(2014.01)i
FI: B41M5/00 100; B41J2/17; B41J2/19; B41M5/00 120; C09D11/30

According to International Patent Classification (IPC) or to both national classification and IPC

**B. FIELDS SEARCHED**

Minimum documentation searched (classification system followed by classification symbols)

B41M5/00; B41J2/17; B41J2/19; C09D11/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-007466 A (TAIYO INK MFG CO., LTD.) 13 January 2022 (2022-01-13) claims, paragraphs [0040]-[0048] | 1 |
| Y | | 1-2, 7 |
| A | | 3-6 |
| Y | JP 2008-018540 A (FUJIFILM CORPORATION) 31 January 2008 (2008-01-31) claims, paragraphs [0008]-[0078] | 1-2, 7 |
| A | | 3-6 |
| Y | JP 2008-119936 A (KYOCERA MITA CORP.) 29 May 2008 (2008-05-29) claims, paragraphs [0045]-[0060] | 2, 7 |
| Y | JP 2013-154528 A (SEIKO EPSON CORPORATION) 15 August 2013 (2013-08-15) claims, paragraphs [0057]-[0077] | 2, 7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2024** | **09 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/020616**

| Patent document cited in search report | Publication date (day/month/year) | Patent family member(s) | Publication date (day/month/year) |
|---|---|---|---|
| JP 2022-007466 A | 13 January 2022 | (Family: none) | |
| JP 2008-018540 A | 31 January 2008 | (Family: none) | |
| JP 2008-119936 A | 29 May 2008 | (Family: none) | |
| JP 2013-154528 A | 15 August 2013 | US 2013/0194326 A1<br>claims, paragraphs [0076]-[0101]<br>CN 103223774 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 06069300 B
- JP 2011043565 A
- JP 05969208 B
- JP 2014201593 A
- JP 2017222547 A
- JP 2018030122 A


### Non-patent literature cited in the description


- **C. HANSCH** ; **A. LEO**. Substituent Constants for Correlation Analysis in Chemistry and Biology. John Wiley & Sons, 1969
- Medicinal Chemistry Project. Pomona College, August 1991
- *Organic Materials for Imaging*, 1993, 187-192